# EUROPEAN PATENT SPECIFICATION

(11) **EP 1 872 077 B1**
(45) Date of publication and mention of the grant of the patent: **16.08.2017**
(21) Application number: 06757468.1
(22) Date of filing: 17.04.2006
(51) Int. Cl.: F28D 20/00, F25B 13/00, F25D 16/00, F24F 5/00, F28D 7/10, F28F 1/24, F25B 5/02

(54) **HEAT STORAGE AIR CONDITIONER**
KLIMAANLAGE MIT WÄRMESPEICHER
CONDITIONNEUR D'AIR A STOCKAGE THERMIQUE

(30) Priority: 21.04.2005 KR 20050033067; 12.08.2005 KR 20050074065; 12.08.2005 KR 20050074066
(43) Date of publication of application: 02.01.2008
(73) Proprietor: LG Electronics Inc., Seoul 150-721 (KR)
(72) Inventor: KOH, Jae Yoon, Gangnam-gu,Seoul 135-537 (KR); KIM, In Kyu, Gyeongsangnam-do 645-750 (KR); HWANG, Jin Ha, Chungcheongbuk-do 373-808 (KR)
(74) Representative: Boult Wade Tennant
(86) International application number: PCT/KR2006/001411
(87) International publication number: WO 2006/112638

(56) References cited:
- JP-A- 11 270 920
- JP-A- H11 270 920
- JP-A- 2003 065 584
- JP-A- 2003 065 584
- JP-A- 2004 317 091
- JP-A- 2004 317 091
- JP-A- 2005 042 980
- JP-A- 2005 042 980

## Description

### Technical Field

The present invention relates to air conditioners, and more particularly, to a heat storage air conditioner in which a cold heat is produced and stored in a tank during night time for using the cold heat during day time for cooling a room.

### Background Art

In general, the air conditioner is an appliance for cooling or heating a room by means of a refrigerating cycle of refrigerant having a compressor, a four way valve, an outdoor heat exchanger (a condenser or evaporator), an expansion device, and an indoor heat exchanger, for providing a comfortable room environment to a user.

Currently, for saving a utility power cost, the heat storage air conditioner is also used in which the room is cooled by using a condensing heat source of ice produced during night time when people use less utility power during day time when people use more utility power.

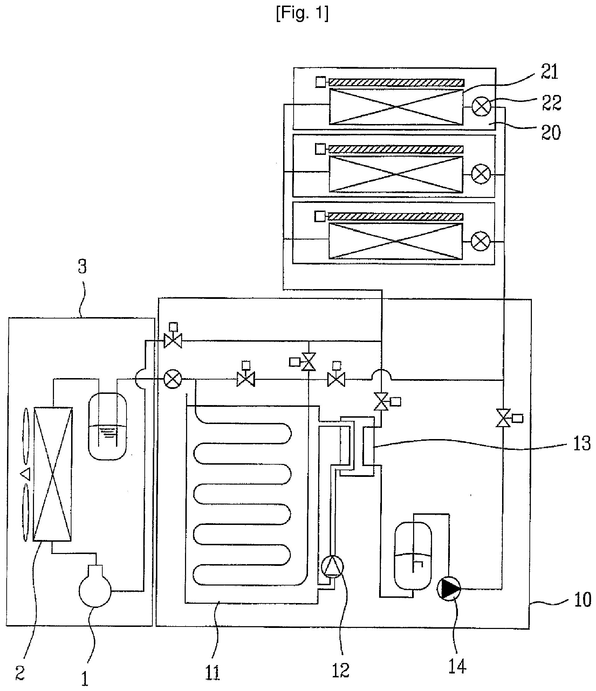

FIG. 1 illustrates a diagram of an exemplary related art heat storage air conditioner.

Referring to FIG. 1, the related art heat storage air conditioner is provided with an outdoor unit 3, a thermal storage unit 10, and an indoor unit 20.

The outdoor unit 3 is provided with a compressor 1 for compressing refrigerant, and an outdoor heat exchanger 2 for making the refrigerant compressed to flow by the compressor 1 to heat exchange.

The thermal storage unit 10 is provided on one side of the outdoor unit 3 for temporary storage of energy. The thermal storage unit 10 is provided with a thermal storage tank 11 having a heat storage substance held therein, a water pump 12 for circulating water in the thermal storage tank 11, a heat exchanger 13 for heat exchange between the water and the refrigerant, and a refrigerant pump 14 for forced flow of refrigerant. The heat exchanger 13 is connected to one end of the thermal storage tank 11, and has cold water circulated therethrough from the thermal storage tank 11 by the water pump 12.

In the meantime, the indoor unit 20 is installed in the room which requires cooling, and is provided with an indoor heat exchanger 21 for making heat exchange, and an expansion device 22 for expanding refrigerant introduced to the indoor heat exchanger 21.

The related art heat storage air conditioner makes ice in the thermal storage tank 11 of the thermal storage unit 10 during night time, and cools the room by using the ice in the thermal storage tank 11 made thus during day time (for an example, 13:00 ~ 16:00 hours) when a utility power consumption is great.

In this instance, the compressor 1 is stationary, and the refrigerant pump 14 circulates the refrigerant. Therefore, in the refrigerant cycle of this instance, the refrigerant is supplied to the indoor unit 20 by the refrigerant pump 14. The refrigerant supplied to the indoor unit 20 thus is passed through the expansion device 22, and made to heat exchange with air at the indoor heat exchanger 21 which serves as an evaporator. In this instance, since the indoor heat exchanger 21 absorbs heat from the air, to drop a temperature of the air blown through the indoor heat exchanger 21, the room is cooled.

The refrigerant absorbs heat at the indoor heat exchanger, introduced to the thermal storage tank 11, and discharges the heat to cold water at the heat exchanger 13, to return to cold refrigerant again. The cold refrigerant is then introduced to the refrigerant pump 14, to finish a cycle.

### Disclosure of Invention

### Technical Problem

However, the related art heat storage air conditioner has the following problems.

The related art heat storage air conditioner has the outdoor unit 3 and the thermal storage unit fabricated as one unit. Therefore, separation of respective components is difficult.

Moreover, since the thermal storage unit 10 has all units required for cooling the room by using stored heat, such as the refrigerant pump 14 and so on, starting from the thermal storage tank 11 and the heat exchanger 13, mounted therein, assembly and installation is difficult and maintenance thereof is also very inconvenient.

JP-H11-270920 discloses a multi-functional heat pump system including a cold heat storage tank and capable of performing cooling, heating, hot water, heat storage and cold storage operations. JP 2005-42980 discloses a heat accumulating type air conditioner. JP 2003-65584 discloses an air conditioner using a constant capacity compressor for improvement of cooling efficiency.

### Technical Solution

Accordingly, the present invention is directed to a heat storage air conditioner that substantially addresses one or more problems due to limitations and disadvantages of the related art.

It would be desirable to provide a heat storage air conditioner which permits easy assembly/disassembly, and maintenance, and to improve room cooling efficiency.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

Accordingly, the invention provides a heat storage air conditioner as set out in claim 1.

Embodiments of the invention provide a heat storage air conditioner including an outdoor unit having an outdoor heat exchanger for making heat exchange, and at least one compressor for compressing refrigerant, an indoor unit having at least one indoor heat exchanger for making heat exchange, a thermal storage unit for storing energy, the thermal storage unit having a thermal storage heat exchanger for making heat exchange, and at least one functional unit for selective control of a refrigerant flow among the outdoor unit, the indoor unit and the thermal storage unit according to an operation condition.

Embodiments of the invention also provide a heat storage air conditioner including an outdoor unit having an outdoor heat exchanger for making heat exchange, and at least one compressor for compressing refrigerant, an indoor unit having at least one indoor heat exchanger for making heat exchange, a thermal storage unit for storing energy, the thermal storage unit having a thermal storage heat exchanger for making heat exchange, and at least one functional unit for selective control of a refrigerant flow among the outdoor unit, the indoor unit and the thermal storage unit according to an operation condition, wherein the functional unit includes a first supplementary pump having one side connected to a pipe line connected to the thermal storage heat exchanger of the thermal storage unit, and the other side connected to a pipe line connected to the indoor unit, for pumping up the refrigerant heat exchanged at the thermal storage unit to the indoor unit, a supplementary heat exchanger unit for heat exchanging the refrigerant heat exchanged at the indoor unit again, and supplying to the thermal storage unit, and a plurality of valves for selective control of a refrigerant flow to the outdoor unit, the thermal storage unit, the indoor unit, the first supplementary pump, and the supplementary heat exchanger unit.

Thus, the present invention permits easy connection/disconnection of the units because the outdoor unit, the indoor unit, the thermal storage unit and the functional unit are provided individually and connected to one another.

Moreover, the easy connection/disconnection of the functional unit and the thermal storage unit permits easy connection of the functional unit and the thermal storage unit to an existing air conditioner.

It is to be understood that both the foregoing general description and the following detailed description of the present invention are exemplary and explanatory and are intended to provide further explanation of the invention as claimed.

### Advantageous Effects

Accordingly, the present invention can improve convenience of use at the end as connection/disconnection of the units is easy. That is, the easy connection/disconnection of the functional unit and the thermal storage unit permits to connect the functional unit and the thermal storage unit even to an existing air conditioner.

Moreover, as the thermal storage unit has a plurality of the thermal storage heat exchanger in the thermal storage tank. Accordingly, a contact area to the thermal storage substance increases compared to a case only one thermal storage heat exchanger is used, thereby improving heat exchange efficiency.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings;
FIG. 1 illustrates a diagram of a related art heat storage air conditioner, schematically;
FIG. 2 illustrates a bird s eye view of a building showing installation of a heat storage air conditioner in accordance with a preferred embodiment of the present invention;
FIG. 3 illustrates a diagram of a heat storage air conditioner not covered by the present invention;
FIG. 4 illustrates a diagram showing a refrigerant flow of a heat storage air conditioner not covered by the present invention in a thermal storage mode ;
FIG. 5 illustrates a diagram showing a refrigerant flow of a heat storage air conditioner not covered by the present invention in a room cooling with stored heat mode ;
FIG. 6 illustrates a diagram showing a refrigerant flow of a heat storage air conditioner not covered by the present invention in a direct room cooling mode ;
FIG. 7 illustrates a p-h chart of a heat storage air conditioner in accordance with a preferred embodiment of the present invention in a thermal storage mode ;
FIG. 8 illustrates a diagram showing installation of units of a heat storage air conditioner;
FIG. 9 illustrates a diagram showing another type of installation of units of a heat storage air conditioner;
FIG. 10 illustrates a diagram showing another type of installation of units of a heat storage air conditioner;
FIG. 11 illustrates a diagram of a heat storage air conditioner not covered by the present invention;
FIG. 12 illustrates a diagram of a heat storage air conditioner in accordance with a preferred embodiment of the present invention;
FIG. 13 illustrates a diagram of a heat storage air conditioner not covered by the present invention;
FIG. 14 illustrates a diagram of a heat storage air conditioner not covered by the present invention;
FIG. 15 illustrates a diagram of a thermal storage unit of the air conditioner in FIG. 14;
FIG. 16 illustrates a diagram showing an operation of the air conditioner in FIG. 14 in a cold water circulating mode;
FIG. 17 illustrates a diagram of a heat storage air conditioner not covered by the present invention;
FIG. 18 illustrates a diagram of a heat storage air conditioner not covered by the present invention;
FIG. 19 illustrates a section of super cooling means of the heat storage air conditioner in FIG. 18, schematically;
FIG. 20 illustrates a perspective view of an example of a super cooler of the super cooling means in FIG. 19;
FIG. 21 illustrates a section of an embodiment of a thermal storage unit of the heat storage air conditioner of the present invention, schematically;
FIG. 22 illustrates a section of another embodiment of a thermal storage unit of the heat storage air conditioner of the present invention, schematically; and
FIG. 23 illustrates a section of another embodiment of a thermal storage unit of the heat storage air conditioner of the present invention, schematically.

### Mode for the Invention

Reference will now be made in detail to the preferred embodiments of the present invention, examples of which are illustrated in the accompanying drawings. Wherever possible, the same reference numbers will be used throughout the drawings to refer to the same or like parts.

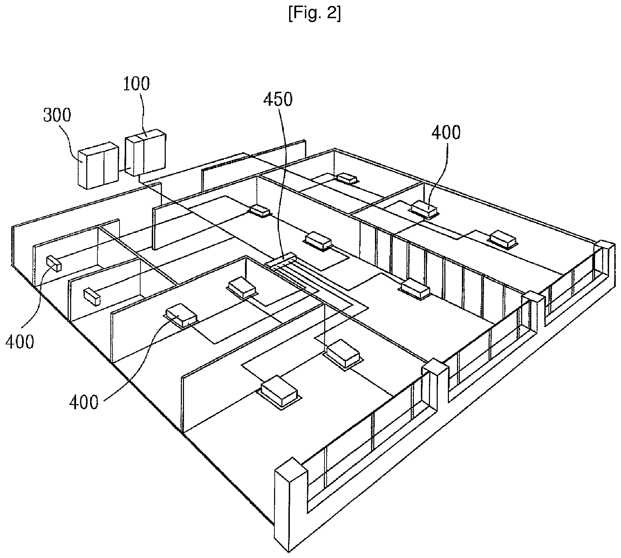

FIG. 2 illustrates a bird s eye view of a building showing installation of a heat storage air conditioner in accordance with a preferred embodiment of the present invention.

Referring to FIG. 2, on an outside of a building, there are an outdoor unit 100, a functional unit 200, and a thermal storage unit 300 of a heat storage air conditioner installed independent from one another, each connected to indoor units 400 in the building with pipes.

One or a plurality of the indoor units 400 is installed. A variety of types of the indoor units 400 are installed in the rooms respectively, so as to be operative individually or as integrally. There may be a distribution head 450 in the building for distribution of refrigerant to the plurality of indoor units 400.

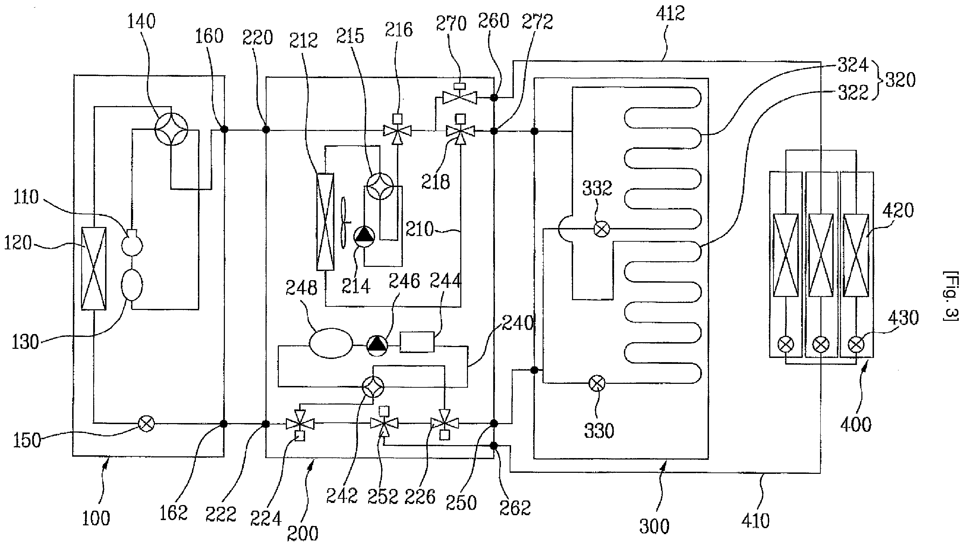

FIG. 3 illustrates a diagram of a heat storage air conditioner not covered by the present invention.

Referring to FIG. 3, the outdoor unit includes a compressor 110 for compressing refrigerant, and an outdoor heat exchanger 120 for making heat exchange between the refrigerant and environmental air.

There may be one or a plurality of the compressor 110 for compressing the refrigerant to high temperature, and high pressure. Though only one compressor 110 may be provided to compress the refrigerant, a constant speed compressor which is operative at a constant speed, and an inverter compressor which is a variable heat pump may be provided as one pair for operation according to a load thereon.

On one side of the compressor 110, there is an accumulator 130. The accumulator 130 collects liquid refrigerant from the refrigerant from the compressor 110 for only introducing gas refrigerant to the compressor 110.

In more detail, of the refrigerant introduced into the accumulator 130, the liquid refrigerant failed to vaporize yet but left as liquid still is held on a lower side of the accumulator 130 owing to density, to introduce only the gas refrigerant on an upper side of the accumulator 130 to the compressor 110.

The gas refrigerant is separated from the liquid refrigerant thus, because, if the liquid refrigerant failed to vaporize yet but left as liquid still is introduced into the compressor 110 directly, a load on the compressor 110 which compresses refrigerant to high temperature, high pressure refrigerant increases, to result in damage to the compressor 110.

The outdoor unit 100 has a four way valve 140 having a plurality of pipe lines connected thereto so as to be able to communicate with one another. The four way valve 140, arranged to change a refrigerant flow according to cooling/heating operation, has ports connected to an outlet of the compressor 110, an inlet of the accumulator 130, the outdoor heat exchanger 120, and the functional unit 200 or the indoor unit 400.

On an outlet side of the outdoor unit 100, there is an outdoor expansion device 150 for controlling a flow rate of the refrigerant passed through the outdoor heat exchanger 120.

The outdoor unit 100 is connected to the functional unit 200. Therefore, an outdoor low pressure connection 160 is provided at the pipe line connected to the four way valve 140, and an outdoor high pressure connection 162 is provided on one side of the outdoor expansion device 150.

Of course, the outdoor unit 100 may be connected to the indoor unit 400 directly. That is, the outdoor low pressure connection 160 is connected to an indoor low pressure flow line 412 to be described later, and the outdoor high pressure connection 162 may be connected to an indoor high pressure flow line 410 to be described later.

The functional unit 200, installed on one side of the outdoor unit 100, controls the refrigerant flow according to an operation condition.

The functional unit 200 has a supplementary flow line 210 provided with a supplementary heat exchanger 212 and a supplementary pump 214 on one side of the supplementary heat exchanger 212 for forcing the refrigerant flow.

The supplementary heat exchanger 212 makes heat exchange between the refrigerant and the outdoor air like the outdoor heat exchanger 120, and is operative selectively when the thermal storage unit 300 is used. That is, in a case the energy stored in the thermal storage unit 300 is used, the supplementary heat exchanger 212 is used only when required according to a capacity of the indoor unit 400 or a required temperature.

The supplementary pump 214 enforces the refrigerant flow to be introduced into the supplementary line 210 and the supplementary heat exchanger 212, and compresses the refrigerant. Mounted between the supplementary heat exchanger 212 and the supplementary pump 214, there is a first four way valve 215.

At both ends of the supplementary line 210, a first valve 216 and a second valve 218 are mounted respectively for opening/closing the supplementary line 210.

One end of the functional unit 200 is connected to the outdoor unit 100 so as to be in communication therewith. In more detail, the functional unit 200 has a functional low pressure connection 220 connected to the outdoor lower pressure connection 160 of the outdoor unit 100, and a functional high pressure connection 222 connected to the outdoor high pressure connection 162 of the outdoor unit 100.

In the functional unit 200, there is a third valve 224 and a fourth valve 226 mounted on a line extended from the functional high pressure connection 222. A liquid flow line 240 is branched from the third valve 224 and the fourth valve 226. That is, at both ends of the liquid flow line, the third valve 224 and the fourth valve 226 are mounted for controlling the refrigerant flow.

The liquid flow line 240 is a passage for guiding the refrigerant flow from the thermal storage unit 300 to the indoor unit 400 in a case the air conditioner is operational on the thermal storage unit 300. That is, the liquid flow line 240 serves as a passage for guiding the refrigerant from the thermal storage unit 300 to the indoor unit 400 in a thermal storage room cooling mode.

The liquid flow line 240 has an inlet and an outlet controlled by a second four way valve 242.

There is a dryer 244 mounted on the liquid flow line 240, for removing moisture from the refrigerant in the liquid flow line 240.

On one side of the dryer 244, there is a liquid pump 246, for enforcing the refrigerant flow in the liquid flow line 240, particularly, when the air conditioner is operational on the thermal storage unit 300.

On one side of the liquid pump 246, there is a receiver 248 for separating gas refrigerant from the liquid refrigerant.

In more detail, the receiver 248 holds surplus of refrigerant from the outdoor unit 100, and makes only liquid refrigerant to flow. That is, in the thermal storage room c ooling mode, the receiver 248 makes only the liquid refrigerant to flow to the thermal storage unit 300.

The fourth valve 226 has one side connected to a high pressure thermal storage connection 250. The high pressure thermal storage connection 250 has one end of a pipe line of the thermal storage unit 300 connected thereto.

In the functional unit 200, there is a fifth valve 252 mounted on a pipe line between the third valve 224 and the fourth valve 226. The fifth valve 252 has an indoor high pressure flow line 410 connected thereto, which is connected to an indoor unit 400 to be described later.

The functional unit 200 is connected to the indoor unit 400 with the indoor high pressure flow line 410 and the indoor low pressure flow line 412. The functional unit 200 has an indoor high pressure connection 262 and an indoor low pressure connection 260 connected to the indoor high pressure flow line 410 and the indoor low pressure line 412, respectively.

The indoor low pressure connection 260 is a portion connected to a pipe line of the indoor unit 400 a relatively low pressure refrigerant flows therein in room cooling, and the indoor high pressure connection 262 is a portion connected to a pipe line of the indoor unit 400 a relatively high pressure refrigerant flows therein in room cooling.

Mounted on one side of the indoor low pressure connection 260, there is a shut off valve 270 for selective shut off of the refrigerant flow between the indoor unit 400 and the functional unit 200.

The functional unit 200 receives refrigerant from the thermal storage unit 300 through the low pressure thermal storage connection 272 connected to the second valve 218.

The thermal storage unit 300 is connected to the functional unit 200, and the refrigerant flow between the thermal storage unit 300 and the functional unit 200 is controlled by the second valve 218 and the fourth valve 226.

The thermal storage unit 300 has a thermal storage tank 310 provided therein for holding thermal storage substance. Accordingly, as the thermal storage substance is heated or cooled, heat is stored in the thermal storage tank 310. The thermal storage substance in the thermal storage tank 310 stores energy, and is preferably water H₂O having a high specific gravity.

In the thermal storage tank 310, there is thermal storage heat exchanger 320. There are two thermal storage heat exchangers 320 provided thereto, for making heat exchange between the refrigerant therein and the thermal storage substance on an outside of the thermal storage tank 310. That is, the thermal storage heat exchanger 320 includes a first thermal storage heat exchanger 322 and a second thermal storage heat exchanger 324, to heat or cool the thermal storage substance in the thermal storage tank 310 depending on a temperature of the refrigerant in the thermal storage heat exchanger 320.

Mounted on one side of the first thermal storage heat exchanger 322, there is a first thermal storage expansion device 330, and mounted on one side of the second thermal storage heat exchanger 324, there is a second thermal storage expansion device 332. The first thermal storage expansion device 330 and the second thermal expansion device 332 control a refrigerant flow rate to the thermal storage unit 300, and make the refrigerant to expand to low temperature and low pressure.

As the first thermal storage expansion device 330 and the second thermal expansion device 332, a variety of types of valves, such as electronic expansion valves called as LEV (linear expansion valve), solenoid valves, and so on can be used.

Accordingly, in the thermal storage mode, the first thermal storage expansion device 330 and the second thermal storage expansion device 332 expands the refrigerant condensed at the outdoor heat exchanger 120 adiabatically, to drop a temperature and a pressure of the refrigerant, and forwards a flow rate of the refrigerant proper to a load to the thermal storage heat exchanger 320.

It is preferable that the first thermal storage expansion device 330 and the second thermal storage expansion device 332 adjust openings of valves to adjust flow rates of decompressed refrigerant, actively.

The indoor unit 400 includes an indoor heat exchanger for making heat exchange, and an indoor expansion device 430 for expanding the refrigerant and controlling the flow rate of the refrigerant.

There is one or two indoor unit 400, having a capacity proper to cool or heat a room space.

The indoor expansion device 430 is an LEV like the first thermal storage expansion device 330 and the second thermal storage expansion device 332. Therefore, in the direct room cooling mode the indoor expansion device 430 expands the refrigerant condensed at the outdoor heat exchanger 120 adiabatically, to drop a temperature and a pressure of the refrigerant, and forwards a flow rate of the refrigerant proper to a load to the indoor heat exchanger 420.

The operation of the heat storage air conditioner will be described, taking a case of room cooling as an example.

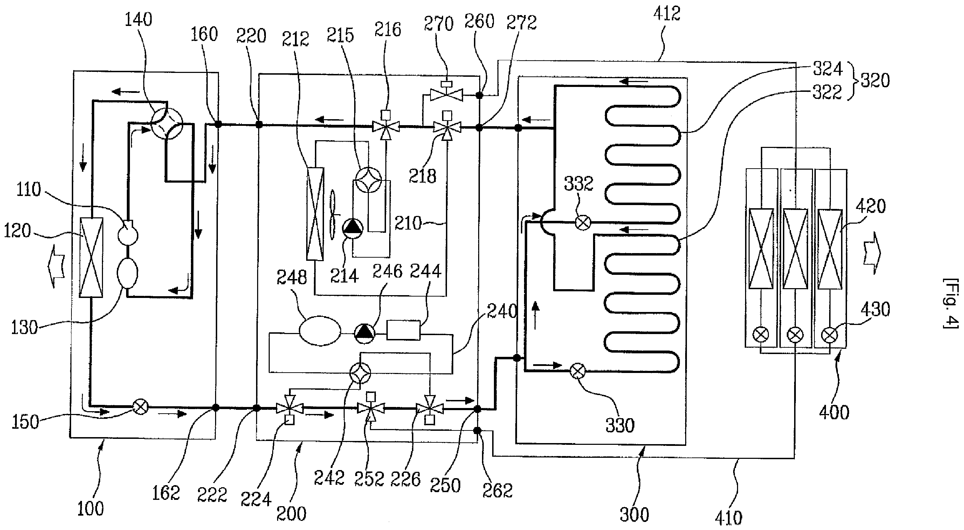

At first, a case the heat storage air conditioner not covered by the present invention is operational in a thermal storage mode with reference to FIG. 4.

In the thermal storage mode, it is intended to store an energy in the thermal storage unit 300 in advance during the night time, i.e., in a period power consumption is low, more specifically, it is intended to change a phase of a thermal storage substance (ice making, if the thermal storage substance is water) held in the thermal storage tank 310 of the thermal storage unit 300.

In this instance, the outdoor unit 100, the functional unit 200 and the thermal storage unit 300 are operated. That is, the functional unit 200 makes the outdoor unit 100 and the thermal storage unit 300 in communication to each other, and cuts a flow of the refrigerant to the indoor unit 400.

In more detail, refrigerant flows through the indoor low pressure flow line 412 and the indoor high pressure flow line 410 are cut off by the shut off valve 270 and the fifth valve 252, to stop refrigerant flow between the indoor unit 400 and the functional unit 200.

The first valve 216 and the second valve 218 stop a refrigerant flow led to the supplementary flow line 210. The third valve 224 and the fourth valve 226 cut off the liquid flow line 240.

Accordingly, as shown in arrows, by the compressor 110, the refrigerant is compressed to a high pressure, and introduced to the outdoor heat exchanger 120 through the four way valve 140.

In general, since the outdoor heat exchanger 120 is installed on an outside of a building, the refrigerant flowing through an inside of the outdoor heat exchanger 120 heat exchanges with air on an outside of the building.

Since it is in the thermal storage mode, the refrigerant in the outdoor heat exchanger 120 discharges heat to the air outside of the building. That is, since the outdoor heat exchanger 120 serves as a condenser, the refrigerant is cooled by means of heat exchange with the air outside of the building, to become liquid refrigerant (of course, not a perfect liquid refrigerant).

Then, the refrigerant is discharged from the outdoor heat exchanger unit 120, passes through the outdoor expansion device 150, and is introduced to the functional unit 200.

The refrigerant is then introduced into the thermal storage unit 300. That is, because the liquid flow line 240 is cut off by the third valve 224 and the fourth valve 226, the refrigerant introduced into the functional unit 200 flows led to the thermal storage unit 300 through the high pressure thermal storage connection 250, directly.

The refrigerant introduced into the thermal storage unit 300 is split into two, and passes through the first thermal storage expansion device 330 and the second thermal storage expansion device 332, respectively. The refrigerant passed through the first thermal storage expansion device 330 and the second thermal storage expansion device 332 becomes relatively low temperature, low pressure refrigerant by the expansion, more preferably a refrigerant at a temperature below zero.

The refrigerant passed through the first thermal storage expansion device 330 and the second thermal storage expansion device 332 heat exchanges as the refrigerant passes through the first thermal storage heat exchanger 322 and the second thermal storage heat exchanger 324. In this instance, the first thermal storage heat exchanger 322 and the second thermal storage heat exchanger 324 serve as evaporators, to drop a temperature of the thermal storage substance held in the thermal storage tank 310, to change a phase (freezing) of the thermal storage substance in the thermal storage tank 310, at the end. That is, the thermal storage substance in the thermal storage tank 310 has a temperature dropped, to have a phase (freezing) changed gradually starting from a circumference of the thermal storage heat exchanger 320.

The refrigerant deprived of heat as the refrigerant passes through the thermal storage heat exchanger 320 is vaporized to gas, and introduced into the functional unit 200 through the low pressure thermal storage connection 272. Because the second valve 218 and the first valve 216 cut off a flow line led to the supplementary flow line 210, the refrigerant introduced into the functional unit 200 does not pass through the supplementary flow line 210, but is introduced into the outdoor unit 100 through the functional low pressure connection 220 and the outdoor low pressure connection 160. The refrigerant introduced into the outdoor unit 100 is guided to the accumulator 130 through the four way valve 140.

The accumulator 130 filters liquid state refrigerant, only to introduce gas state refrigerant to the compressor 110.

According to above steps, a cycle of the thermal storage mode is completed, and in the thermal storage mode , a phase change is progressed in the thermal storage tank 310 of the thermal storage unit 300 (ice is made if the thermal storage substance is water).

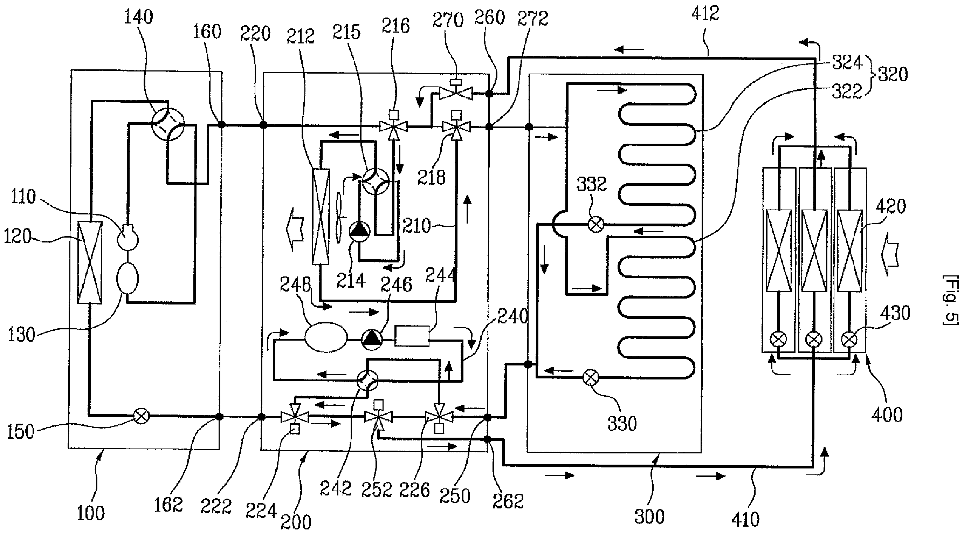

FIG. 5 illustrates a refrigerant flow in a room cooling with stored heat mode. That is, a process for cooling a room by using energy storage by above thermal storage mode is shown.

In the room cooling with stored heat mode is mostly used during day time when the power consumption is great, to cool a room by using the energy stored during night time.

In this instance, the refrigerant flows through the functional unit 200, the thermal storage unit 300, and the indoor unit 400, and stops at the outdoor unit 100. That is, the refrigerant flow to the outdoor unit 100 is cut off, and refrigerant flow to the supplementary flow line 210 and the liquid flow line 240 is permitted, by the first valve 216 and the third valve 224. In this instance, the second valve 218 cuts off a flow line connected to the first valve 216, and opens flow lines led to the supplementary flow line 210 and the low pressure thermal storage connection 272. The fourth valve 226 cuts off a flow line connected to the fifth valve 252, and opens flow lines led to the liquid flow line 240 and the high pressure thermal storage connection 250. The fifth valve 252 opens a flow line led to the indoor high pressure flow line 410, and cuts off a flow line connected to the fourth valve 226.

At first, the refrigerant introduced to the functional unit 200 through the high pressure thermal storage connection 250 will be described.

In this instance, since the liquid flow line 240 is opened by the third valve 224 and the fourth valve 226, the refrigerant introduced to the functional unit 200 from the thermal storage unit 300 flows through the liquid flow line 240.

The refrigerant flow through the liquid flow line 240 is forced by the liquid pump 246. Therefore, the refrigerant flowing through the liquid flow line 240 has moisture and gas refrigerant therein removed therefrom as the refrigerant passes through the receiver 248 and the liquid pump 246.

In more detail, the receiver 248 removes the gas refrigerant, and the dryer 244 removes the moisture from the refrigerant.

Accordingly, the liquid refrigerant passed through the liquid flow line 240 passes through the second four way valve 242, the third valve 224, and the fifth valve 252 in succession, and is introduced to the indoor unit 400 through the indoor high pressure connection 262.

Since there are a plurality of the indoor units 400, the refrigerant supplied from the functional unit 200 is distributed uniformly to the indoor unit 400. The refrigerant introduced to the indoor units 400 passes through a plurality of the indoor expansion devices 430, respectively.

The refrigerant passed through the indoor expansion device 430 becomes to have a low pressure, and is introduced to, and heat exchanges at the indoor heat exchanger 420. That is, heat exchange takes place between the refrigerant flowing through an inside of the indoor heat exchanger 420 and the air in the room, and as the indoor heat exchanger 420 serves as an evaporator, the refrigerant takes heat from the room air.

Thus, the refrigerant vaporized to a gas state as the refrigerant passes through the indoor heat exchanger 420, and the room air has heat taken therefrom to cool the room.

The refrigerant from the indoor heat exchanger 420 is guided by the indoor low pressure flow line to the functional unit 200 through the indoor low pressure connection 260. In this instance, the refrigerant passed through the shut off valve 270 is introduced to the supplementary flow line 210 through the first valve 216. the refr igerant introduced to the supplementary flow line 210 is enforced to flow to the supplementary heat exchanger 212 by the supplementary pump 214.

The supplementary heat exchanger 212 is a small sized heat exchanger, serving as a condenser. Therefore, the refrigerant passed through the supplementary heat exchanger 212 has a temperature thereof dropped by the supplementary heat exchanger 212.

The refrigerant passed through the supplementary heat exchanger 212 passes through the second valve 218 and the low pressure thermal storage connection 272 in succession, and is introduced to the thermal storage unit 300. The refrigerant introduced to the thermal storage unit 300 passes through the thermal storage heat exchanger 320.

Heat exchange is caused at the thermal storage heat exchanger 320. That is, heat exchange takes place between the refrigerant in the thermal storage heat exchanger 320 and the thermal storage substance (ice) in the thermal storage tank 310. Accordingly, the thermal storage substance (ice) in the thermal storage tank 310 takes heat from the refrigerant in the thermal storage heat exchanger 320 and is melted, through which process, the refrigerant passed through an inside of the thermal storage heat exchanger 320 becomes to have a low temperature.

The refrigerant discharged from the thermal storage heat exchanger 320 is introduced to the functional unit again through the high pressure thermal storage connection 250.

According to above steps, a cycle of the room cooling with stored heat is completed, to cool the room.

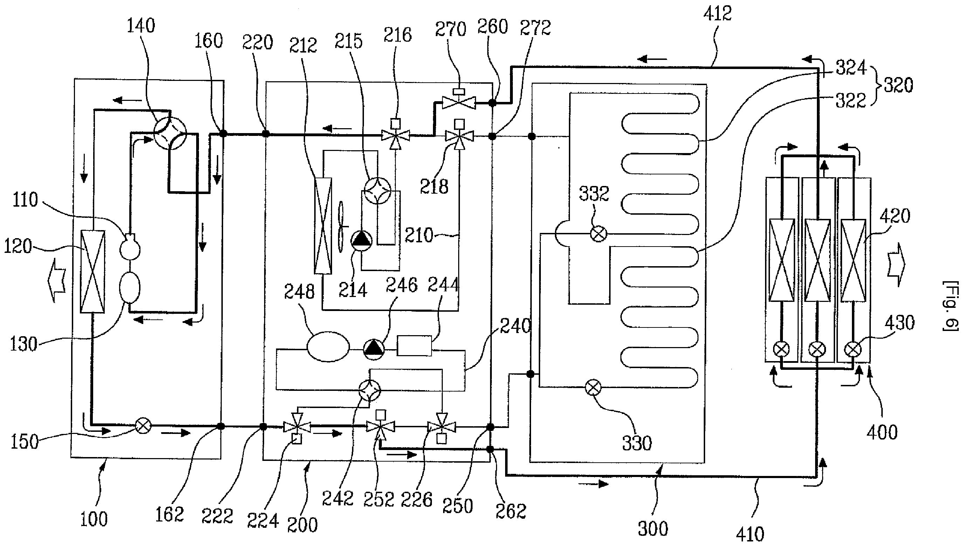

FIG. 6 illustrates a direct room cooling mode in which the room is cooled, not by using the thermal storage unit 300, but by using the outdoor unit 100, directly.

In the direct cooling mode, the shut off valve 270 is opened, and the first valve 216 and the second valve 218 cut of flow lines led to the supplementary flow line 210. The third valve 224 and the fourth valve 226 cut off flow lines led to the liquid flow line 240. The fifth valve 252 cuts off a flow line connected to the fourth valve 226, and opens a flow line connected to the indoor high pressure flow line 410.

Upon putting the compressor 110 into operation, the high pressure refrigerant from the compressor 110 is introduced to the outdoor heat exchanger 120 through the four way valve 140. Since the outdoor heat exchanger 120 serves as a condenser, the outdoor air takes heat from the refrigerant, to make the refrigerant to be low temperature liquid refrigerant.

The refrigerant passed through the outdoor heat exchanger 120 passes through the outdoor expansion device 150 and introduced to the functional unit 200. The refrigerant introduced to the functional unit 200 passes through the third valve 224, the fifth valve 252, and the indoor high pressure connection 262 in succession, and is introduced to the indoor unit 400, directly. That is, refrigerant flow to the thermal storage unit 300 is cut off.

Since there are the plurality of the indoor units 400, the refrigerant supplied from the functional unit 200 is distributed uniformly to the indoor unit 400. The refrigerant introduced to the indoor units 400 passes through a plurality of the indoor expansion devices 430, respectively.

The refrigerant passed through the indoor expansion device 430 becomes to have a low pressure, and is introduced to, and heat exchanges at the indoor heat exchanger 420. That is, heat exchange takes place between the refrigerant flowing through an inside of the indoor heat exchanger 420 and the air in the room, and as the indoor heat exchanger 420 serves as an evaporator, the refrigerant takes heat from the room air.

Thus, the refrigerant vaporized to a gas state as the refrigerant passes through the indoor heat exchanger 420, and the room air has heat taken therefrom to cool the room. This is the same with the operation of the indoor unit 400 in the room cooling with stored heat mode described before.

The refrigerant from the indoor heat exchanger 420 is guided by the indoor low pressure flow line to the functional unit 200 through the indoor low pressure connection 260. In this instance, the refrigerant passed through the shut off valve 270 is introduced to the supplementary flow line 210 through the first valve 216. The refrigerant introduced to the supplementary flow line 210 is enforced to flow to the supplementary heat exchanger 212 by the supplementary pump 214.

In this instance, since the shut off valve 270 is opened, and the first valve 216 cut off a refrigerant flow to the supplementary flow line 210, the refrigerant introduced to the functional unit 200 is introduced to the outdoor unit 100 through the functional low pressure connection 220 and the outdoor low pressure connection 160.

The refrigerant introduced to the outdoor unit 100 is guided to the accumulator 130 through the four way valve 140. The accumulator 130 has liquid state refrigerant filtered from the refrigerant only to introduce gas state refrigerant to the compressor 110.

According to above steps, the direct room cooling mode is completed.

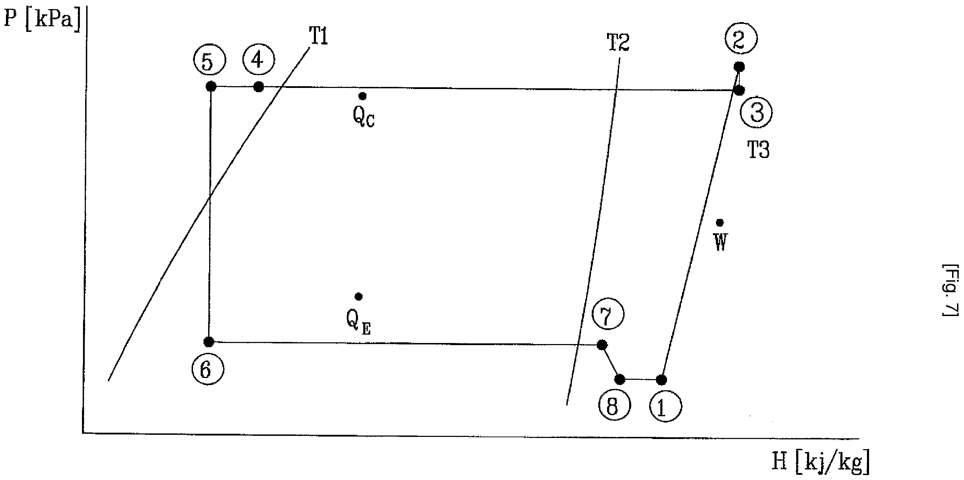

FIG. 7 illustrates a p-h chart in a thermal storage mode.

j and k denote states before and after the compressors respectively, and 1 and m denote states at an inlet and an outlet of the outdoor heat exchanger 120 serving as a condenser, respectively. That is, a refrigerant pressure rises at the compressor 110, and there is no pressure change at the outdoor heat exchanger 120 during heat exchange takes place, but has a change of enthalpy h by the temperature change.

A symbol n denotes a state of the refrigerant introduced into the functional unit 200, and o and p denote states of refrigerant before and after the thermal storage heat exchanger 320, respectively.

In more detail, the refrigerant is involved in pressure drop as the refrigerant passes through the indoor heat expansion device 430 (n o). There is no pressure change in the thermal storage heat exchanger 320 which serves as a vaporizer, during which process enthalpy h increases due to increase of a temperature of the refrigerant. An unexplained symbol q denotes a state of the refrigerant introduced to the outdoor unit 100 from the functional unit 200.

In the meantime, though the foregoing description has been based on cooling operation of the heat storage air conditioner of the present invention, the heat storage air conditioner can be used for heating a room.

That is, as an example, though the foregoing description shows a case in which the thermal storage tank 310 of the thermal storage unit 300 is used as a room cooling thermal storage tank during night time to change a phase (ice making) of thermal storage substance for room cooling, the refrigerant flow may be reversed, to use the thermal storage tank 310 as a room heating thermal storage tank.

In this case, the thermal storage substance in the thermal storage tank 310 is involved in a temperature rise to a high temperature to accumulate thermal energy, and the room is heated by using the thermal energy during day time.

Or alternatively, a room cooling thermal storage tank and a room heating thermal storage tank may be provided separately, to use the room cooling thermal storage tank in room cooling and to use the room heating thermal storage tank in room heating.

Since operation principles of the room cooling and room heating systems are the same with an operation principle of a general room cooling/heating air conditioner, detailed description of which will be omitted.

The outdoor unit 100 and the thermal storage unit 300 may be installed on various positions depending on a strength of the building or user s convenience.

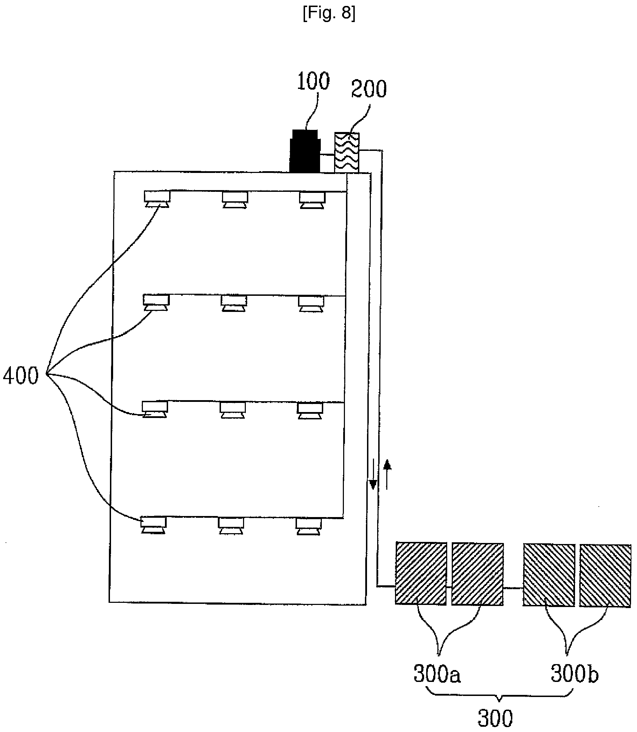

FIGS. 8 to 10 illustrate various installation states of the outdoor unit 100 and the thermal storage unit 300.

FIG. 8 illustrates a case used generally, wherein the outdoor unit 100 and the functional unit 200 are installed on a top of the building, and the thermal storage unit 300 is installed on a ground.

The thermal storage unit 300 has four sets in total, wherein one pair on a left side are room cooling thermal storage units 300a, and one pair on a right side are room heating thermal storage units 300b.

That is, of course, the thermal storage unit 300 can be used in dual purposes for room cooling and room heating, or alternatively, as shown in FIG. 8, room cooling thermal storage units, and room heating thermal storage units may be provided and used, separately.

If there are a plurality of the thermal storage units 300, the plurality of thermal storage units 300 may be used selectively under the control of the functional unit 200. That is, according to capacity of the indoor unit 400, the plurality of the thermal storage units 300 may be used, entirely, or partially.

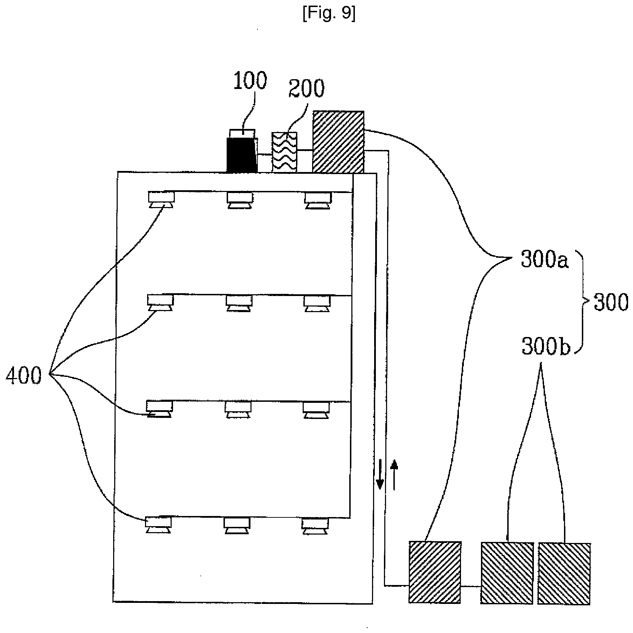

FIG. 9 illustrates a configuration applicable to a case when a structural safety of the building is secured. That is, as shown, one of the thermal storage unit 300 is installed on the top of the building.

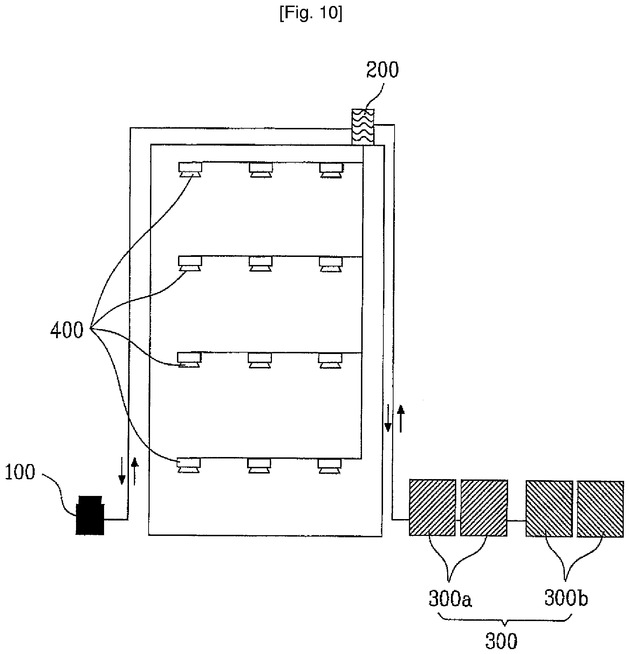

FIG. 10 illustrates a configuration applicable to a case when a structural safety of the building can not be secured. That is, as shown, in this case, not only the thermal storage units 300, but also the outdoor unit 100 is installed on the ground.

As has been discussed, in the present invention, the thermal storage unit 300 and the indoor units 400 are connected to the functional unit 200, separately. Therefore, the thermal storage unit 300 and the indoor unit 400 can be connected/disconnected to/ from the functional unit 200 as cases demand.

Moreover, even if the thermal storage unit 300 and/or the indoor unit 400 are not disconnected from the functional unit 200, use of the thermal storage unit 300 or the indoor unit 400 can be cut off by operating a plurality of valves. That is, a refrigerant flow to the thermal storage unit 300 or the indoor unit 400 can be cut off by the valves.

Thus, the thermal storage unit 300 can be used selectively under the control of the functional unit 200.

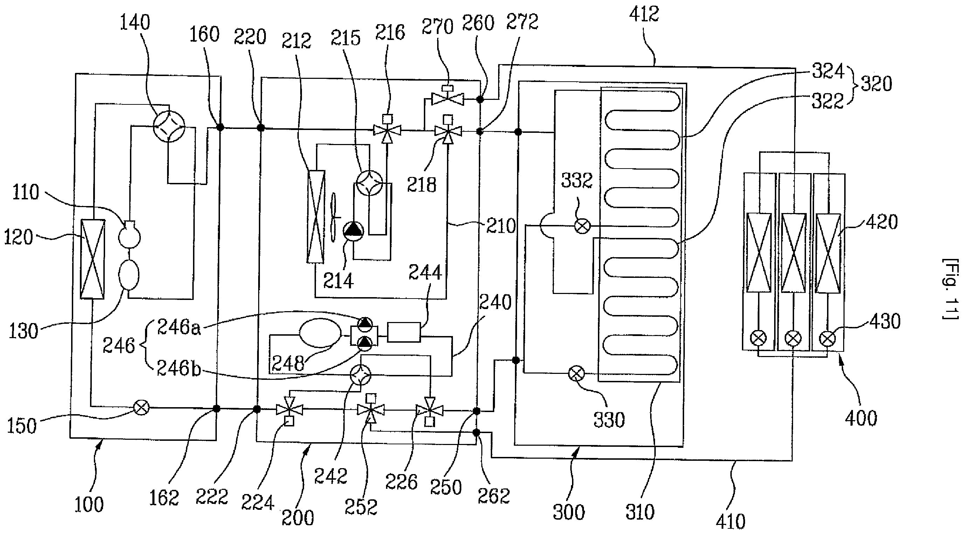

In the meantime, FIG. 11 illustrates a diagram of a heat storage air conditioner not covered by the present invention. A basic system of the heat storage air conditioner is identical to the air conditioner of FIG.3, except that the second embodiment suggests two liquid pumps 246 provided to the functional unit 200.

In more detail, the heat storage air conditioner includes a combination of the liquid pump 246 of a constant speed pump 246a and an inverter pump 246b. The constant speed pump 246a rotates at a constant speed, and the inverter pump 246b has a variable rotation speed.

Therefore, in a case a load for transfer of the refrigerant is low relatively, only the inverter pump 246b is operated. Of course, in this case too, the inverter pump 246b is rotated at a speed varied with the load. Then, if the load for transfer of the refrigerant reaches to a level which the inverter pump 246b can not deal with, the constant speed pump 246a is put into operation, additionally.

For an example, referring to FIG. 10, in a case the functional unit 200 is installed on the top of the building, and the thermal storage unit 300 and the outdoor unit 100 are installed on the ground, the liquid pump 246 becomes to be positioned higher than the thermal storage unit 300 and the outdoor unit 100.

The liquid pump 246 is required to pump up the refrigerant from the thermal storage unit 300 or the outdoor unit 100 to the indoor units 400. Accordingly, it is preferable that both the inverter pump 246b and the constant speed pump 246a are operated to increase a pumping capacity.

In short, the heat storage air conditioner of the present invention has a refrigerant flow rate varied with installation heights of the functional unit 200 and the indoor units 400, and a number of operational indoor units 400, wherein if the load for transfer of the refrigerant is low, the inverter pump 246b is operated at a proper rotation speed. In a case if transfer of the refrigerant is difficult only with the inverter pump 246b, the constant speed pump 246b is used additionally, for increasing a transfer capacity of the refrigerant.

Thus, by operating the inverter pump 246b and the constant speed pump 246a selectively according to the load, a power consumption can be reduced compared to a case when a large capacity constant speed pump is always operated.

Of course, though it is preferable that the inverter pump 246b and the constant speed pump 246a are used selectively as the liquid pump 246, different from this, the same as the foregoing embodiment, only two constant speed pumps may be provided as the liquid pump 246, or only two inverter pumps may be provided as the liquid pump 246.

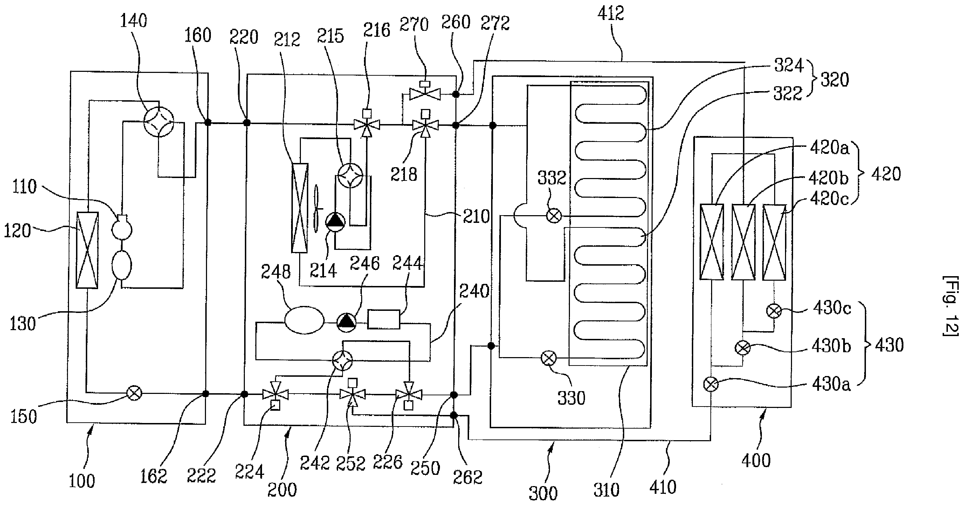

FIG. 12 illustrates a diagram of a heat storage air conditioner in accordance to a preferred embodiment of the present invention. The embodiment heat storage air conditioner is designed such that the indoor heat exchangers 420 of the indoor units 400 have vaporization temperatures different from one another. Accordingly, the vaporization temperatures of the indoor heat exchangers 420 different from one another enable room cooling, refrigeration, and freezing.

In more detail, a plurality of the indoor heat exchangers 420 of the indoor unit 400 includes a first indoor heat exchanger 420a for room cooling, a second indoor heat exchanger 420b for refrigerating, and a third indoor heat exchanger 420c for freezing.

In order to make adiabatic expansion of the refrigerant introduced to the indoor heat exchangers 420a, 420b, and 420c, the indoor expansion device 430 includes a first indoor expansion device 430a, a second indoor expansion device 430b, and a third indoor expansion device 430c.

The refrigerant to be introduced to the first indoor heat exchanger 420a passes through the first indoor expansion device 430a only. The refrigerant to be introduced to the second indoor heat exchanger 420b passes through the first indoor expansion device 430a and the second indoor expansion device 430b. The refrigerant to be introduced to the third indoor heat exchanger 420c passes through the first indoor expansion device 430a, the second indoor expansion device 430b, and the third indoor expansion device 430c in succession.

Above configuration enables the refrigerant to be introduced to the second indoor heat exchanger 420b to have a vaporization temperature lower than the first indoor heat exchanger 420a, and the refrigerant to be introduced to the third indoor heat exchanger 420c to have a vaporization temperature lower than the second indoor heat exchanger 420b. Therefore, in the room cooling with stored heat mode, or the direct room cooling mode, the first indoor heat exchanger 420a, the second indoor heat exchanger 420b, and the third indoor heat exchanger 420c can make room cooling, refrigeration, and freezing at rooms the first indoor heat exchanger 420a, the second indoor heat exchanger 420b, and the third indoor heat exchanger 420c are installed therein, respectively.

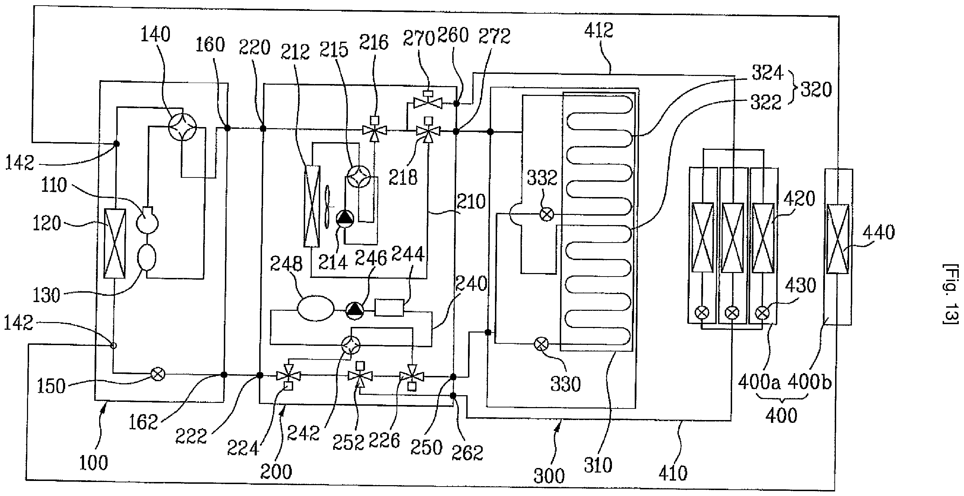

FIG. 13 illustrates a diagram of a heat storage air conditioner not covered by the present invention. The heat storage air conditioner is designed such that the indoor units 400 includes a room cooling indoor unit 400a and a room heating indoor unit 400b.

Alike the indoor unit 400 of FIG.3, the room cooling indoor unit 400a is connected to the functional unit 200, and includes a plurality of units for room cooling, refrigeration, and freezing, respectively.

The room heating indoor unit 400b has a room heating heat exchanger 440, and connected to opposite ends of the outdoor heat exchanger 120 of the outdoor unit 100. At connections of the room heating indoor unit 400b to the outdoor heat exchanger 120, there are room heating valves 142 mounted thereon. The room heating valves 142 control a refrigerant flow to/from the room heating indoor unit 400b.

The room heating valves 142 are three way valves, and mounted on an inlet side and an outlet side respectively, for controlling a portion of a refrigerant flow to the outdoor heat exchanger 120 to be introduced to the room heating indoor unit 400b. Accordingly, even if the room cooling indoor unit 400a makes room cooling, refrigeration, or freezing, the room heating heat exchanger 440 of the room heating indoor unit 400b serves as a condenser together with the outdoor heat exchanger 120, to heat the room.

The refrigerant passed through the room heating indoor unit 400b joins with the refrigerant passed through the outdoor heat exchanger 120, and flows together.

The room heating valve 142 opens a flow line to the room heating indoor unit 400b in the thermal storage mode and/or the direct room cooling mode, to supply high temperature and high pressure refrigerant to the room heating indoor unit 400b, for heating the room.

That is, the heat storage air conditioner provides an advantage of performing room heating additionally by using the room heating indoor unit 400b in the thermal storage mode and the direct room cooling mode.

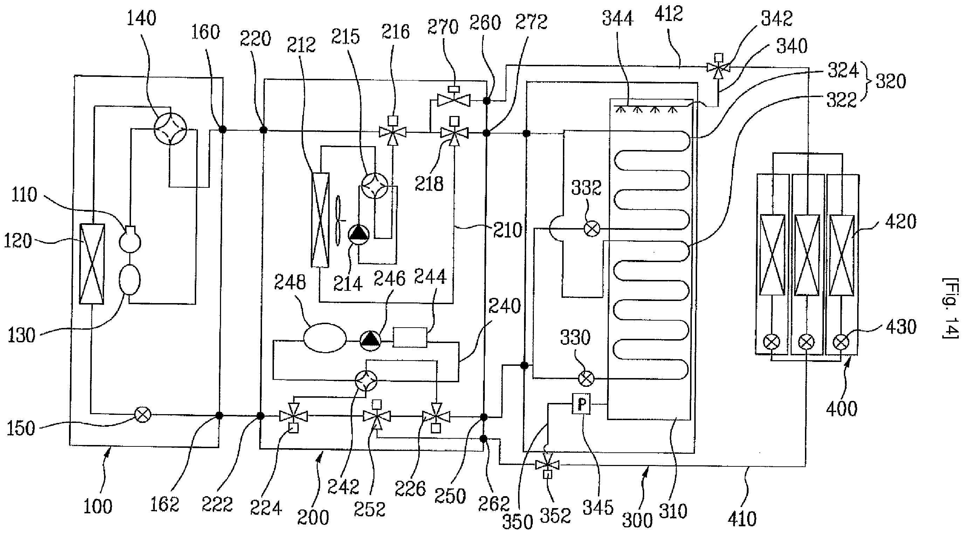

In the meantime, FIGS. 14 to 16 each illustrates a heat storage air conditioner not covered by the present invention.

The heat storage air conditioner is designed such that the thermal storage substance (for an example, water) held in the thermal storage unit 300 can be circulated through the indoor unit 400, to make room cooling by refrigerant circulation or cold water circulation.

This will be described in more detail.

Referring to FIG. 14, a water supply flow line 340 connected to an inside of the thermal storage unit 300 is branched from the indoor low pressure flow line 412 through which the refrigerant flows from the indoor unit 400 to the functional unit 200, and a water discharge flow line 350 connected to the thermal storage unit 300 is branched from the indoor high pressure flow line 410 connected between the functional unit 200 and the indoor unit 400.

There is a water supply valve 342 mounted at a connection of the water supply flow line 340 and the indoor low pressure flow line 412, for opening/closing the water supply flow line 340 and the indoor low pressure flow line 412. At a connection of the water discharge flow line and the indoor high pressure line 410, there is a water discharge valve 352 mounted thereon, for opening/closing the water discharge flow line 350 and the indoor high pressure flow line 410, selectively.

At an end of the water supply flow line 340, there is a spray nozzle 344 for spraying the thermal storage substance (water) supplied to an inside of the thermal storage tank 310. Therefore, the thermal storage substance (water) introduced to the inside of the thermal storage tank 310 by such a spray nozzle 344 is sprayed into the thermal storage tank 310, and cooled by air.

There is a circulating pump 354 mounted on the water discharge flow line 350. The circulating pump 354 forces the thermal storage substance (water) to circulate from the thermal storage tank 310 to the indoor unit 400. That is, the thermal storage substance (water) pushed away from the thermal storage unit 300 by the circulating pump 354 is supplied to the indoor unit 400 through a indoor high pressure flow line 410 to be explained later, and introduced to the thermal storage unit 300 again through the water supply flow line 340.

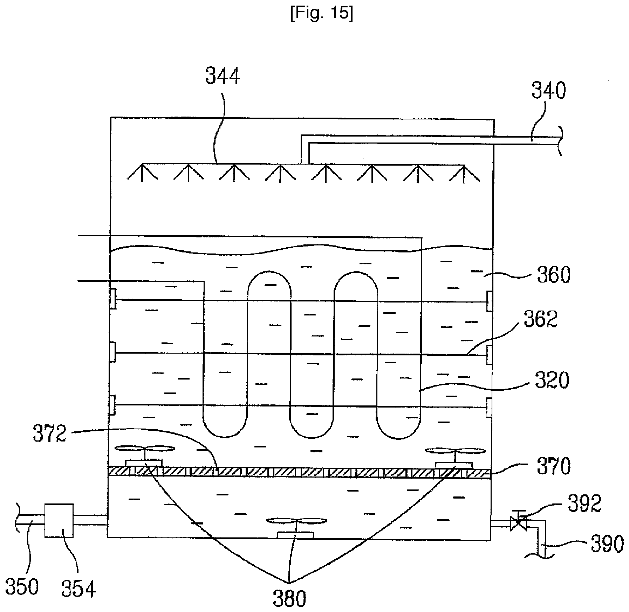

Referring to FIG. 15, in the thermal storage tank 310 of the thermal storage unit 300, there is water 360 which is the thermal storage substance held up to a predetermined height. The thermal storage heat exchanger 320in the thermal storage tank 310 is secured to securing members 362 arranged across the thermal storage heat exchanger 320.

In the meantime, in the thermal storage tank 310, there is a stratification plate 370 for partitioning the thermal storage tank 310 in an up/down direction. The stratification plate 370 suppresses an up/down flow of the thermal storage substance i.e., water 360 in the thermal storage tank 310, to induce stratification.

In more detail, there is a temperature difference between an upper side water and a lower side water in the thermal storage tank 310. That is, there is water having a higher temperature (approx. 7~8°C or 10~15°) on the upper side, and water having a lower temperature (approx. 4~5°C) on the lower side. Accordingly, the stratification plate 370 makes the upper side and lower side water 360 having temperatures different from each other to form layers, for discharging the water 360 having the lower temperature on the lower side of the stratification plate 370.

The stratification plate 370 has a plurality of fine pass through holes 372 through which the water 360 in the thermal storage tank 310 can pass. That is, it is preferable that the stratification plate 370 has a mesh shape, for slow pass through of the water 360 in the thermal storage tank 310.

In the thermal storage tank 310, there is circulating means 380 for forcing the water 360 in the thermal storage tank 310 to circulate. That is, as shown, there is a plurality of circulating means 380 on a bottom of the thermal storage tank 310 or on the stratification plate 370, for forcing an up/down circulation of the water 360.

The circulating means 380 includes fans, motors, and so on, for operation in a case the thermal storage substance (water) in the thermal storage tank 310 is not circulated through the indoor unit 400 (in a case of so called refrigerant circulating ). That is, in a case the thermal storage substance (water) in the thermal storage tank 310 is circulated through the indoor unit 400 (in a case of so called cold water circulating), the circulating means 380 is not used, but used only in a case refrigerant in the thermal storage heat exchanger 320 is circulated through an inside of the indoor unit 400 (in a case of refrigerant circulating ).

There is a drain pipe 390 connected to one side of a lower side of the thermal storage tank 310. The drain pipe 390 is provided for draining the thermal storage substance (water) to an outside of the thermal storage tank 310 when it is intended to replace the thermal storage substance (water) in the thermal storage tank 310. On the drain pipe 390, there is a drain valve 392 mounted thereon for opening/closing the drain pipe 390.

The heat storage air conditioner has the following operation.

The water supply valve 342 and the water discharge valve 352 cut of the water supply flow line 340 and the water discharge flow line 350 in the thermal storage mode, thermal storage room cooling mode, and the direct room cooling mode. Accordingly, operations of the thermal storage mode, thermal storage room cooling mode, and the direct room cooling mode of the air conditioner are identical to the operations of the air conditioner of FIG. 3

The water supply valve 342 and the water discharge valve 352 open the water supply flow line 340 and the water discharge flow line 350 respectively for circulating the thermal storage substance, i.e., cold water in the thermal storage unit 300 in a cold water circulating mode.

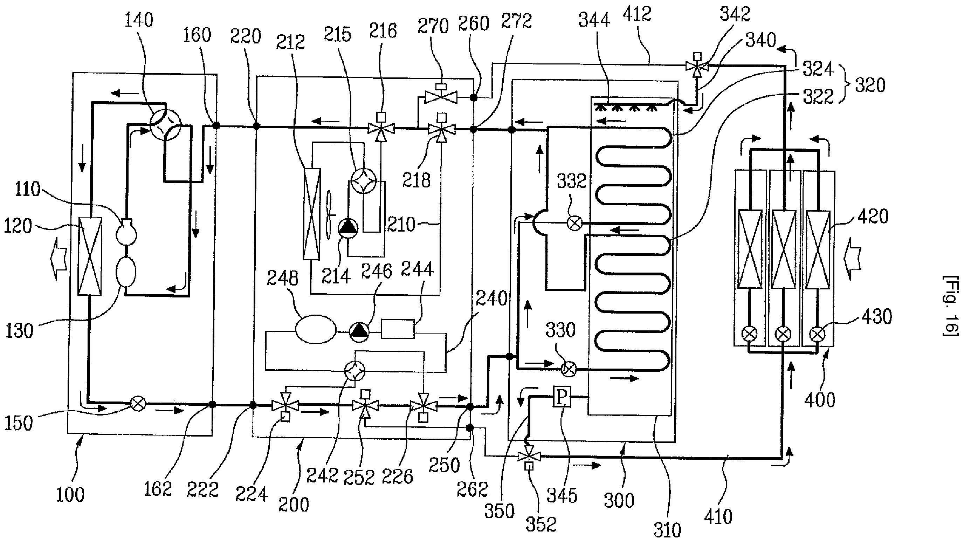

States of circulation of the refrigerant and the cold water (thermal storage substance) in the cold water circulating mode will be described in more detail with reference to FIG. 16.

In the cold water circulating mode, all valves are operated such that the outdoor unit 100 and the thermal storage unit 300 are in communication with the functional unit 200, and a refrigerant flow to the indoor unit is cut off.

That is, the shut off valve 270 is closed, and the first valve 216 and the second valve 218 cut off flow lines to the supplementary flow line 210, and open the other flow lines. The third valve 224 and the fourth valve 226 cut off flow lines to the liquid flow line 240, and open the other flow lines. The fifth valve 252 cuts off a flow line connected to the indoor high pressure flow line 410. According to this, there is no refrigerant flow between the indoor unit 400 and the functional unit 200.

The water supply valve 342 and the discharge valve 352 cut off flow line to the functional unit 200, and open flow lines to the water supply flow line 340 and the discharge flow line 350, respectively.

Upon putting the compressor 110 into operation under this state, the refrigerant is compressed to a high pressure and introduced to the outdoor heat exchanger 120 through the four way valve 140 as shown in arrows. The refrigerant heat exchanged with air on an outside of the building at the outdoor heat exchanger 120 is cooled to a liquid refrigerant (of course, the refrigerant is not a prefect liquid refrigerant).

The refrigerant from the outdoor heat exchanger 120 passes through the outdoor expansion device 150, and introduced to the functional unit 200. The refrigerant introduced to the functional unit 200 is introduced to the thermal storage unit 300 through the third valve 224, the fifth valve 252, and the fourth valve 226.

The refrigerant flow introduced into the thermal storage unit 300 is split into two, and passes through the first thermal storage expansion device 330 and the second thermal storage expansion device 332, respectively. The refrigerant passed through the first thermal storage expansion device 330 and the second thermal storage expansion device 332 becomes relatively low temperature, low pressure refrigerant by the expansion, more preferably a refrigerant at a temperature below zero.

The refrigerant passed through the first thermal storage expansion device 330 and the second thermal storage expansion device 332 heat exchanges as the refrigerant passes through the first thermal storage heat exchanger 322 and the second thermal storage heat exchanger 324. In this instance, the first thermal storage heat exchanger 322 and the second thermal storage heat exchanger 324 serve as evaporators, to drop a temperature of the thermal storage substance held in the thermal storage tank 310.

The refrigerant deprived of heat as the refrigerant passes through the thermal storage heat exchanger 320 is vaporized to gas, and introduced into the functional unit 200 through the low pressure thermal storage connection 272.

The refrigerant introduced into the functional unit 200 is introduced into the outdoor unit 100 through the functional low pressure connection 220 and the outdoor low pressure connection 160. The refrigerant introduced into the outdoor unit 100 is guided to the accumulator 130 through the four way valve 140, and introduced to the compressor 110 again, thereby keeping circulation.

In the meantime, during the refrigerant is circulated through the outdoor unit 100, the functional unit 200, and the thermal storage unit 300, the circulating pump 354 is operated, to circulate the water 360 which is the thermal storage substance from the thermal storage tank 310 to the indoor unit 400. As the circulating pump 354 is operated, the water 360 on the lower side of the thermal storage tank 310 having a temperature dropped relatively is guided to the indoor high pressure flow line 410 through the water discharge flow line 350.

In this instance, since the water discharge valve 352 cuts off a passage to the functional unit 200, the water 360 passed through the water discharge flow line 350 is introduced to the indoor unit 400 through the indoor high pressure flow line 410.

Since there is a plurality of the indoor units 400, the water 360 from the thermal storage tank 310 is distributed to the indoor units 400. The water 360 introduced to the indoor units 400 passes through the indoor expansion devices 430, respectively.

The water 360 passed through the indoor expansion device 430 becomes to have a low pressure, and is introduced to, and heat exchanges at, the indoor heat exchanger 420. That is, heat exchange takes place between the water 420 flowing in the indoor heat exchanger 420 and the air in the room, and, as the indoor heat exchanger 420 serves as a vaporizer, the water 360 takes heat from the room air.

Thus, the water 360 is involved in temperature rise as the water 360 passes through the indoor heat exchanger 420, and the room air has the heat taken therefrom, to cool down the room

The water 360 discharged from the indoor heat exchanger 420 passes through the indoor low pressure flow line 412. In this instance, since a passage to the functional unit 200 is cut off by the water supply valve 342, the water 360 guided through the indoor low pressure flow line 412 is introduced to the water supply flow line 340 of the thermal storage unit 300.

The water 360 passed through the water supply flow line 340 is sprayed from the spray nozzle 344 into the thermal storage tank 310. The water 360 sprayed from the spray nozzle 344 is accumulated in the thermal storage tank 310 and flows downward gradually. In this course, the water 360 in the thermal storage tank 310 is heat exchanged at the thermal storage heat exchanger 320. That is, heat exchange takes place between the water 360 in the thermal storage tank 310 and the refrigerant flowing through the thermal storage heat exchanger 320.

Accordingly, the water 360 in the thermal storage tank 310 is involved in a temperature drop, and moves downward gradually and passes through the stratification plate 370 (see FIG. 15). That is, the water 360 passes through the fine pass through holes 372 in the stratification plate 370, and moves below the stratification plate 370. The cold water 360 moved down below the stratification plate 370 is introduced to the water discharge flow line 350 again. According this process, one cycle is completed.

If it is intended to replace the water 360 in the thermal storage, the drain valve 392 is opened to drain the water 360 through the drain pipe 390 to an outside of the thermal storage tank 310.

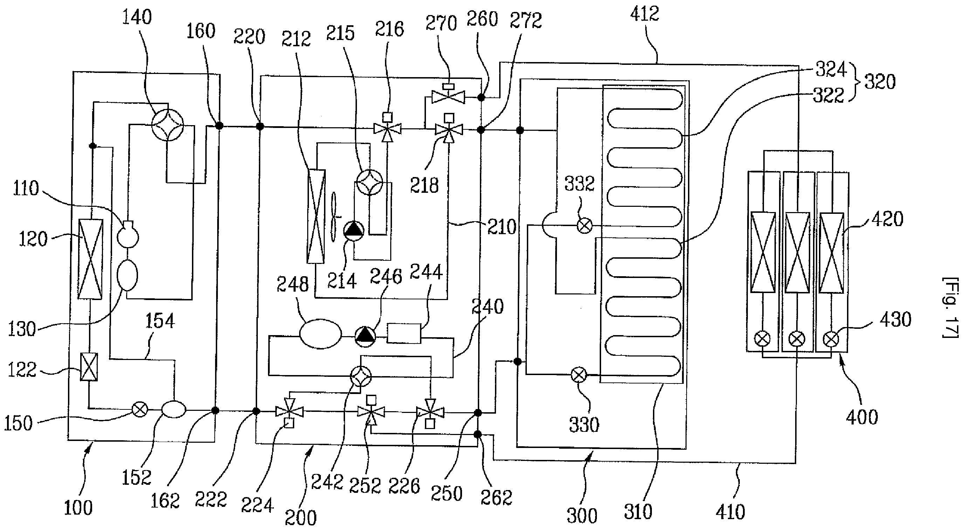

FIG. 17 illustrates a diagram of a heat storage air conditioner not covered by the present invention. The heat storage air conditioner has a super-cooling heat exchanger 122 additionally provided to an outlet side of the outdoor heat exchanger 120 as super-cooling means for cooling the refrigerant further, thereby improving a heat exchange performance further.

Alike the outdoor heat exchanger 120, the super-cooling heat exchanger 122 serves to make heat exchange between the refrigerant and environmental air, particularly, for cooling the refrigerant cooled at the outdoor heat exchanger 120 again at the time of room cooling.

Mounted on an outlet side of the super-cooling heat exchanger 122, there is an outdoor expansion device 150 for controlling a flow rate of the refrigerant passed through the outdoor heat exchanger 120. The outdoor expansion device 150 expands refrigerant when the indoor units 400 heat rooms.

Mounted on the outlet side of the outdoor expansion device 150 further, there is an outdoor receiver 152. The outdoor receiver 152 separates liquid refrigerant from gas refrigerant. That is, the outdoor receiver 152 separates the refrigerant passed through the outdoor heat exchanger 120 and the outdoor expansion device 150 of the outdoor unit 100 into gas refrigerant and liquid refrigerant, and makes the gas refrigerant to return to an inlet side of the outdoor heat exchanger 120.

Therefore, there is a bypass flow line 154 between the outdoor receiver 152 and an inlet to the outdoor heat exchanger 120 for flow of gas refrigerant.

Thus, by condensing the refrigerant for two times through the outdoor heat exchanger 120 and the super-cooling heat exchanger 122, a heat exchange rate of the outdoor unit 100 is increased, to improve performance factors of a refrigerating machine or a heat pump in room cooling or room heating.

Moreover, because the refrigerant is separated into gas refrigerant and liquid refrigerant by the outdoor receiver 152, and the gas refrigerant is returned to the inlet side of the outdoor heat exchanger 120 again, the refrigerant introduced to the thermal storage unit 300 or the indoor unit 400 becomes perfect liquid refrigerant. Accordingly, compared to a general case when mixed (gas + liquid) refrigerant is supplied to the thermal storage unit 300 or the indoor unit 400, there is an advantage in that a heat exchange rate is increased.

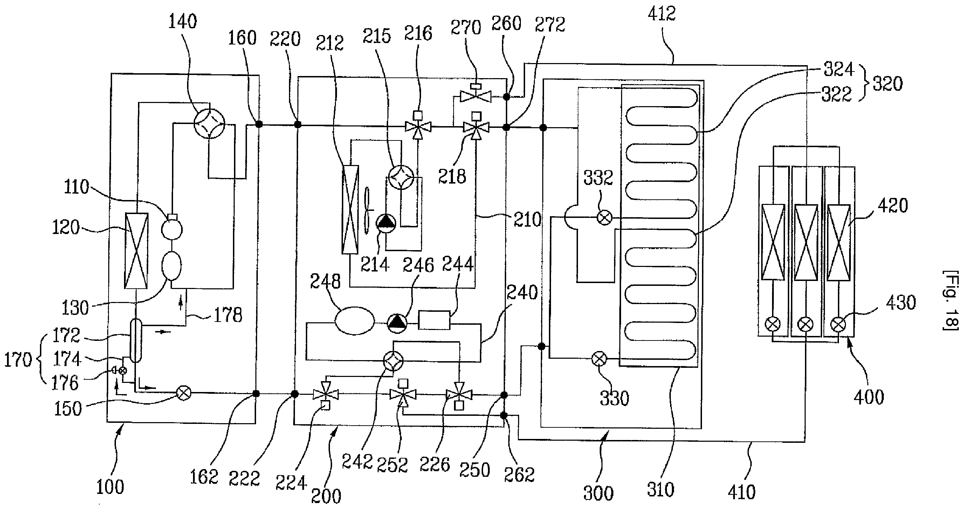

FIGS. 18 to 20 each illustrates a thermal storage air conditioner not covered by the present invention, also including super-cooling means 170 to an outlet side of the outdoor heat exchanger 120. Alike the outdoor heat exchanger 120, the super-cooling means 170 makes the refrigerant and the environmental air to heat exchange, to cool down the refrigerant cooled at the outdoor heat exchanger 120 again, particularly in the thermal storage mode and the direct room cooling mode.

The super-cooling means 170 includes a super-cooler 172 of a double pipe for making heat exchange, a reverse flow pipe 174 for guiding a portion of the refrigerant passed through the outdoor heat exchanger 120 to the super-cooler 172, and a super-cooling expansion valve 176 for expanding the refrigerant introduced to the super-cooler 172 through the reverse flow pipe 174.

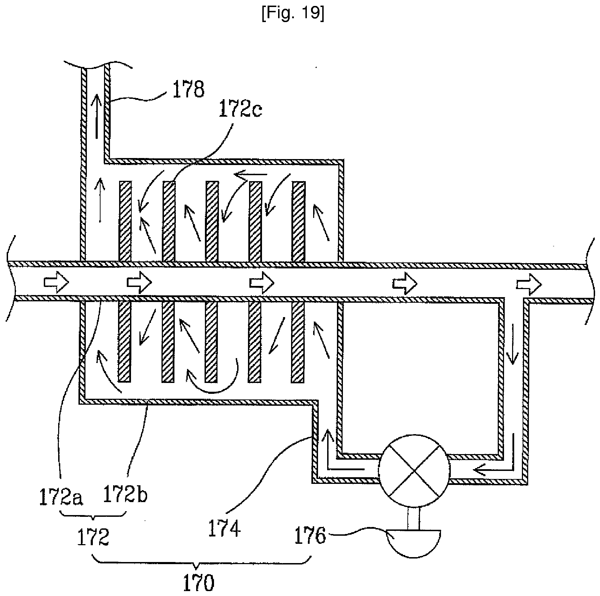

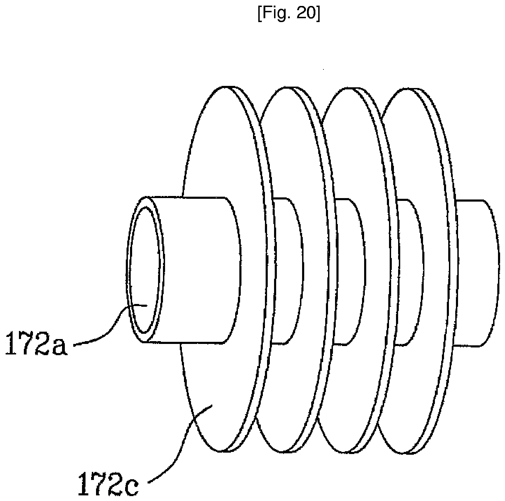

Referring to FIGS. 19 and 20, the super-cooler 172 of a cylindrical double pipe guides both the refrigerant passed through the outdoor heat exchanger 120 and the refrigerant flowing in a reverse direction, to cause heat exchange on inside/outside.

In more detail, the super-cooler 172 includes an inside pipe 172a for flow of the refrigerant passed through the outdoor heat exchanger 120, and an outside pipe 172b for guiding the refrigerant reversing through the reverse flow pipe 174. That is, the inside pipe 172a has the same size and shape with the refrigerant pipe which guides the refrigerant passed through the outdoor heat exchanger 120 for flow of the refrigerant passed through the outdoor heat exchanger 120. The outside pipe 172b, on an outside of the inside pipe 172a, has a diameter relatively greater than the inside pipe 172a, for guiding a reverse flow of a portion of the refrigerant passed through the inside pipe 172a.

On an outside circumference of the inside pipe 172a, there are a plurality of heat dissipation ribs 172c. It is preferable that the heat dissipation ribs 172c are formed to have disk shapes so as to be in conformity with the inside pipe 172a and the outside pipe 172b, and projected outwardly from the inside pipe 172.

As shown, it is preferable that the heat dissipation ribs 172c are mounted perpendicular to a length direction of the inside pipe 172a. Of course, depending on cases, the heat dissipation ribs 172c may have a variety of shapes, such as a shape formed along a helical line on an outside circumference of the inside pipe 172a, or a shape formed along a length direction.

The reverse flow pipe 174 guides a reverse flow of a portion of the refrigerant passed through the outdoor heat exchanger 120, in more detail, guides a portion of the refrigerant passed through the outdoor heat exchanger 120 and the inside pipe 172a of the super cooling means 170 to the outside pipe 172b. Therefore, the reverse flow pipe 174 has a right side end in communication with an outlet side of the inside pipe 172a, and a left side end in communication with the outside pipe 172b.

The super cooling expansion valve 176 is mounted on the reverse flow pipe 174, for controlling a flow rate of the refrigerant reversing through the reverse flow pipe 174, and at the same time with this, expanding the refrigerant flowing through the reverse flow pipe 174. That is, the super cooling expansion valve 176 expands the liquid refrigerant passed through the outdoor heat exchanger 120 so that the liquid refrigerant becomes low temperature gas refrigerant.

According to this, since refrigerant having a relatively high temperature flows through an inside of the inside pipe 172a, and refrigerant having a relatively low temperature flows through an outside of the inside pipe 172a, the refrigerant on inside/ outside of the inside pipe 172a heat exchange with each other. The heat dissipation ribs 172c increases an area of the inside pipe 172a in contact with the refrigerant flowing through an inside of the outside pipe 172b. According to this process, the refrigerant flowing through the inside of the inside pipe 172a is cooled further and flows out of the outdoor unit 100.

There is a bypass flow line 178 connected to one end of the outside pipe 172b. Referring to FIG. 18 again, the bypass flow line 178 is passage for guiding the refrigerant heat exchanged at the refrigerant passes through the inside of the super cooler 172 to the accumulator 130 in the outdoor unit 100.

Accordingly, the refrigerant reversed through the reverse flow pipe 174, and passed through the super cooler 172 is introduced to the accumulator 130 again, and therefrom, is circulated.

Further mounted on the outlet side of the super cooling means 170, there is a outdoor expansion device 150.

The super cooling means 170 on the outlet side of the outdoor heat exchanger 120 cools down the refrigerant passed through the outdoor heat exchanger 120 further, to improve a heat exchange performance at the thermal storage unit 300 or the indoor unit 400.

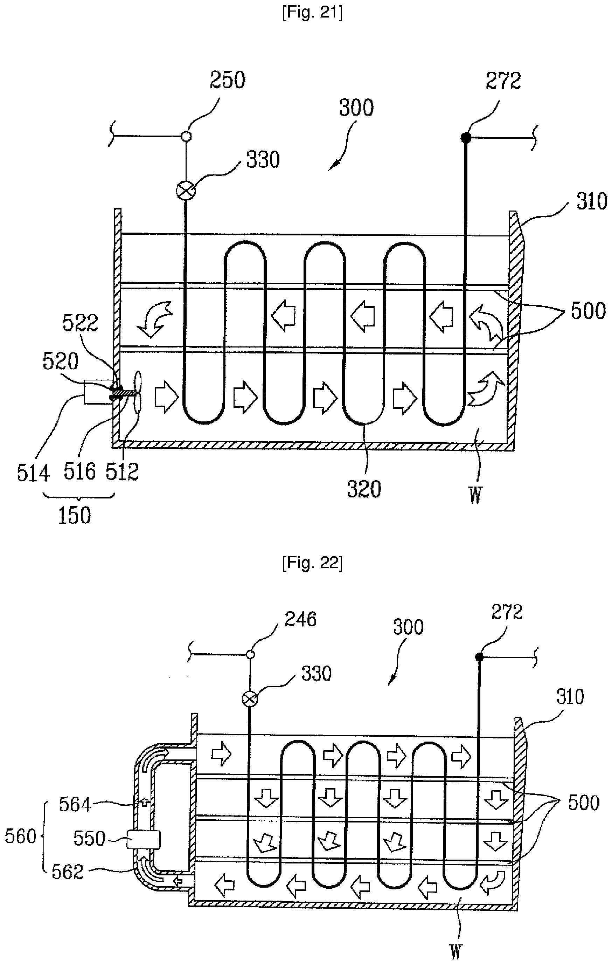

FIG. 21 illustrates a section of an embodiment of a thermal storage unit of the heat storage air conditioner of the present invention, schematically.

The thermal storage tank 310 of the thermal storage unit 300 holds a predetermined amount of thermal storage substance W , for an example, water. Though not shown, it is preferable that the thermal storage substance W is supplemented automatically if there is shortage of the thermal storage substance.

There are a plurality of securing means 500 across an inside of the thermal storage tank 310, for fixedly securing the thermal storage heat exchanger 320 to a predetermined position of an inside surface of the thermal storage tank 310.

In the thermal storage tank 310, there is a circulating unit 510. The circulating unit 510 includes a circulating fan 512 for forcing a flow of the thermal storage substance W in the thermal storage tank 310, a fan motor 514 for providing power to the circulating fan 512, and a motor shaft 516 between the circulating fan 512 and the fan motor 514 for transmission of the rotation power from the fan motor 514 to the circulating fan 512.

The circulating fan 512 has a shape similar to, for an example, a propeller mounted to an air plane or a boat for providing thrust thereto. That is, in general, the circulating fan 512 has 2 to 4 blades, for producing the thrust as the fan rotates.

The circulating fan 512 is mounted in the thermal storage tank 310, and the fan motor 514 is mounted on an outside of the thermal storage tank 310. Therefore, a rotation power is transmitted from the fan motor 514 on the outside of the thermal storage tank 310 to the circulating fan 512 by the motor shaft 516.

Accordingly, the motor shaft 516 is mounted passed through one side of the thermal storage tank 310, preferably with a sealing member 520 mounted on an outside circumference of the motor shaft 516 for preventing the thermal storage substance W from leaking to an outside of the thermal storage tank 310.

The sealing member 520 is placed between the motor shaft 516 and a shaft pass through hole 522 in the thermal storage tank 310 for preventing the thermal storage substance W from leaking through a gap between the shaft pass through hole 522 and the motor shaft 516.

The circulating unit 510 in the thermal storage tank 310 circulates the thermal storage substance W uniformly to make heat transfer uniform in the thermal storage mode, or the room cooling with stored heat mode, which will be described in more detail.

In the thermal storage mode, if the fan motor 514 of the circulating unit 510 is driven by external power applied thereto to generate rotation power, the rotation power is transmitted to the circulating fan 512 through the motor shaft 516, and if the circulating fan 512 is rotated accordingly, the thermal storage substance W starts to circulate as shown in arrows in the drawing.

The thermal storage substance W forcibly flown by the circulating fan 512 moves toward a lateral direction at a lower side of the thermal storage tank 310, and moves toward an opposite lateral direction at an upper side of the thermal storage tank 310, to form a circulation.

The circulating of the thermal storage substance W reduces temperature differences between portions of the upper/lower sides, or the left/right sides of the thermal storage tank 310. For an example, in FIG. 21, there will be no temperature difference between the left/right sides of the thermal storage tank 310. That is, a temperature difference of the thermal storage substance W between an inlet side (a left side of the thermal storage tank 310 in the drawing) of an inside of the thermal storage tank 310, and an outlet side (a right side of the thermal storage tank 310 in the drawing) thereof is reduced.

Moreover, in the room cooling with stored heat mode too, since the thermal storage substance W produced as ice in the thermal storage tank 310 melts by the circulating unit 510 circulates an inside of the thermal storage tank 310 by the circulating fan 512, heat exchange takes place throughout the thermal storage heat exchanger 320 in the thermal storage tank 310, uniformly.

FIG. 22 illustrates another embodiment of a thermal storage unit, wherein, alike the thermal storage unit of the foregoing embodiment, there is the thermal storage substance W in the thermal storage tank 310, and the thermal storage heat exchanger 320 is secured to a predetermined position by securing means 500.

In order to circulate thermal storage substance in the thermal storage unit 300, there are a guide pipe 560 connected to an upper side and a lower side of an outside of one side of the thermal storage tank 310 so as to be in communication with an inside of the thermal storage tank 310, and a circulating pump 550 for forced circulation of the thermal storage substance W through the guide pipe 560.

The guide pipe 560 includes a flow-in pipe 562 connected to the circulating pump 550 and the lower side of the thermal storage tank 310, for guiding the thermal storage substance in the thermal storage tank 310 to the circulating pump 505, and a flow-out pipe 564 connected to the circulating pump 550 and the upper side of the thermal storage tank 310, for guiding the thermal storage substance forcibly flowing by the circulating pump 505 to the upper side of the thermal storage tank 310.

Accordingly, if the circulating pump 550 is put into operation, the thermal storage substance W in the thermal storage tank 310 is circulated continuously by repeating introduction of the thermal storage substance W to the circulating pump 550 from the lower side of the thermal storage tank 310 through the flow-in pipe 562, and discharging to the upper side of the thermal storage tank 310 through the flow-out pipe 564.

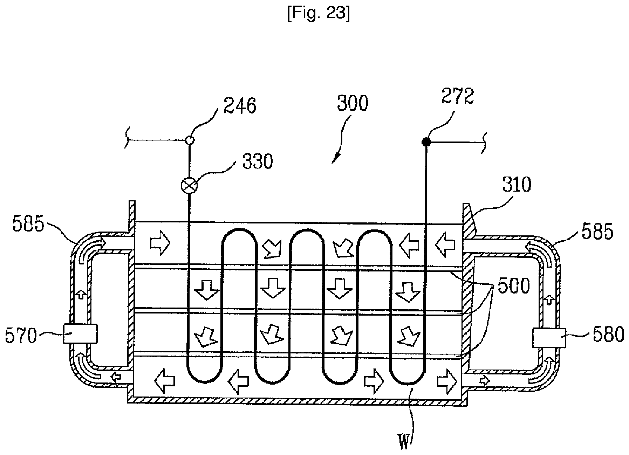

FIG. 23 illustrates a section of another embodiment of a thermal storage unit wherein guide pipes 575, and 585 and circulating pumps 570, and 580 are mounted on an outside of opposite sides of the thermal storage tank 310, for circulating the thermal storage substance from the opposite sides of the thermal storage tank 310.

In the meantime, it will be apparent to those skilled in the art that various modifications and variations can be made in the present invention without departing from the scope of the inventions.

For an example, the thermal storage tank 310 is provided with two thermal storage heat exchangers 320 as an example, there may be one or three or more thermal storage heat exchangers 320 may be provided.

Moreover, there may be a plurality of the thermal storage tanks 310 provided thereto.

Though only one functional unit 200 is shown in each of the foregoing embodiments, there may be a plurality of functional units 200 provided thereto for use selectively as the case demands.

In the meantime, though not shown, there may be more valve control means provided to the functional unit 200. That is, as the first valve 216, the second valve 218, the third valve 224, the fourth valve 226, and the fifth valve 252 are provided to the functional unit 200, there is valve control means for controlling such a plurality of the valves 216, 218, 224, 226, and 252.

Accordingly, the control means controls openings and extents of openings of the first valve 216, the second valve 218, the third valve 224, the fourth valve 226, and the fifth valve 252 according to an operation condition of the air conditioner of the present invention.

As described, the heat storage air conditioner of the present invention has the outdoor unit, the indoor unit, the thermal storage unit, and the functional unit provided separately, and connected to one another.

Accordingly, the present invention can improve convenience of use at the end as connection/disconnection of the units is easy. That is, the easy connection/disconnection of the functional unit and the thermal storage unit permits to connect the functional unit and the thermal storage unit even to an existing air conditioner.

Moreover, as the thermal storage unit has a plurality of the thermal storage heat exchanger in the thermal storage tank. Accordingly, a contact area to the thermal storage substance increases compared to a case only one thermal storage heat exchanger is used, thereby improving heat exchange efficiency.

### Industrial Applicability

The present invention relates to air conditioners.

## Claims

1. A heat storage air conditioner comprising:
an outdoor unit (100) having an outdoor heat exchanger (120) for making heat exchange, and at least one compressor for compressing refrigerant;
an indoor unit (400) having a plurality of indoor heat exchangers for making heat exchange, the plurality of the indoor heat exchangers having vaporization temperatures different from one another;
a thermal storage unit (300) for storing energy, the thermal storage unit having a thermal storage heat exchanger for making heat exchange; and
at least one functional unit (200) for selective control of a refrigerant flow among the outdoor unit, the indoor unit and the thermal storage unit according to an operation condition,
**characterized in that** the plurality of indoor heat exchangers includes a first indoor heat exchanger (420a) for cooling, a second indoor heat exchanger (420b) for refrigerating and a third indoor heat exchanger (420c) for freezing,
wherein the indoor unit includes a first indoor expansion device (430a), a second indoor expansion device (430b) and a third indoor expansion device (430c) on an inlet side of each of the indoor heat exchangers for expanding the refrigerant, and
wherein the refrigerant to be introduced to the first indoor heat exchanger passes through the first indoor expansion device only, the refrigerant to be introduced to the second indoor heat exchanger passes through the first indoor expansion device and the second indoor expansion device, and the refrigerant to be introduced to the third indoor heat exchanger passes through the first indoor expansion device, the second indoor expansion device and the third indoor expansion device in succession.

2. The heat storage air conditioner as claimed in claim 1, wherein the functional unit (200) is mounted to the outdoor unit (100).

3. The heat storage air conditioner as claimed in claim 1, wherein the functional unit (200) is mounted to the thermal storage unit (300).

4. The heat storage air conditioner as claimed in claim 1, wherein the indoor unit (400), the thermal storage unit (300), and the functional unit (200) are mounted individually separate from one another.

5. The heat storage air conditioner as claimed in claim 1, wherein the functional unit (200) includes a plurality of valves for controlling the refrigerant flow according to an operation condition.

6. The heat storage air conditioner as claimed in claim 5, wherein the functional unit includes valve control means for controlling the plurality of valves.

7. The heat storage air conditioner as claimed in claim 1, wherein the functional unit includes a supplementary heat exchanger (212) for exchanging heat between the refrigerant introduced thereto from the indoor unit and outdoor air.

8. The heat storage air conditioner as claimed in claim 1, wherein the functional unit includes a first supplementary pump for pumping up the refrigerant from the thermal storage unit to the indoor unit forcibly.

9. The heat storage air conditioner as claimed in claim 8, wherein the first supplementary pump (246) includes at least one constant speed pump (246a).

10. The heat storage air conditioner as claimed in claim 8, wherein the first supplementary pump includes at least one inverter pump (246b) which has a variable speed.

11. The heat storage air conditioner as claimed in claim 8, wherein the first supplementary pump includes a combination of at least one constant speed pump and at least one inverter pump with a variable speed.

12. The heat storage air conditioner as claimed in claim 11, wherein the constant speed pump is driven separate from the inverter pump.

13. The heat storage air conditioner as claimed in claim 11, wherein the constant speed pump is driven along with the inverter pump.

14. The heat storage air conditioner as claimed in claim 8, wherein the first supplementary pump (246) is positioned higher than the outdoor unit, or the thermal storage unit.

15. The heat storage air conditioner as claimed in claim 8, wherein the functional unit (200) further includes a receiver (248) for separating the refrigerant flown by the first supplementary pump into gas refrigerant and liquid refrigerant.

16. The heat storage air conditioner as claimed in claim 8, wherein the functional unit further includes a dryer (244) for removing moisture from the refrigerant flown by the first supplementary pump.

17. The heat storage air conditioner as claimed in claim 1, wherein the thermal storage unit includes a plurality of thermal storage heat exchangers (322, 324).

18. The heat storage air conditioner as claimed in claim 17, wherein the thermal storage unit further includes a thermal storage expansion device (330, 332) at one side of each of the plurality of thermal storage heat exchangers.

19. The heat storage air conditioner as claimed in claim 1, wherein the thermal storage unit includes at least one thermal storage tank having thermal storage substance held therein for heat exchange with the refrigerant flowing through the thermal storage heat exchanger and storing energy.

20. The heat storage air conditioner as claimed in claim 1, wherein the indoor expansion devices respectively connected to the indoor heat exchangers are connected to outlets of the indoor expansion devices connected to other indoor expansion devices, for re-expanding the refrigerant from other indoor expansion devices, and supplying to the indoor heat exchangers, respectively.

21. The heat storage air conditioner as claimed in claim 1, wherein the indoor expansion devices are arranged such that the refrigerant introduced to the refrigerating or freezing indoor heat exchanger passes through two or more than two indoor expansion devices.

22. The heat storage air conditioner as claimed in claim 1, further comprising a room heating indoor unit having a room heating heat exchanger (440) connected to the outdoor unit from an outside of the outdoor unit for heating a room by heat exchange with high temperature and high pressure refrigerant from the outdoor unit.

23. The heat storage air conditioner as claimed in claim 22, wherein the room heating indoor unit is operative with other indoor units which perform room cooling.

24. The heat storage air conditioner as claimed in claim 22, wherein the room heating heat exchanger (440) has an inlet and an outlet connected to the outdoor heat exchanger at an inlet and an outlet thereof, respectively.

25. The heat storage air conditioner as claimed in claim 24, further comprising a room heating valve (142) mounted on a connection of the outdoor heat exchanger and the room heating heat exchanger for controlling refrigerant supply from the outdoor unit to the room heating indoor unit.

26. The heat storage air conditioner as claimed in claim 19, wherein the thermal storage unit further includes a circulating unit for circulating the thermal storage substance from the thermal storage tank through the indoor unit.

27. The heat storage air conditioner as claimed in claim 26, wherein the circulating unit includes;
a water discharge flow line for discharging the thermal storage substance from the thermal storage tank to the indoor unit,
a water supply flow line for guiding the thermal storage substance passed through the indoor unit to an inside of the thermal storage tank, and
a circulating pump for forced circulation of the thermal storage substance through the water discharge flow line, the indoor unit, and the water supply flow line.

28. The heat storage air conditioner as claimed in claim 19, wherein the thermal storage tank includes a stratification plate (370) for suppressing up/down direction flow of the thermal storage substance in the thermal storage tank to induce stratification of the thermal storage substance.

29. The heat storage air conditioner as claimed in claim 28, wherein the stratification plate has fine pass through holes formed therein for pass through of the thermal storage substance.

30. The heat storage air conditioner as claimed in claim 27, wherein the circulating pump is mounted on the water discharge flow line.

31. The heat storage air conditioner as claimed in claim 27, further comprising a spray nozzle at one end of the water supply flow line for spraying the thermal storage substance supplied to the thermal storage tank.

32. The heat storage air conditioner as claimed in claim 26, wherein the thermal storage tank of the thermal storage unit further includes an internal circulating unit for forcing circulation of the thermal storage substance in the thermal storage tank.

33. The heat storage air conditioner as claimed in claim 1, further comprising an outdoor receiver mounted to the outdoor unit for separating the refrigerant passing through the outdoor heat exchanger into liquid refrigerant and gas refrigerant, and discharging only the liquid refrigerant to an outside of the outdoor unit.

34. The heat storage air conditioner as claimed in claim 33, wherein the outdoor unit further includes a bypass flow line for returning the gas refrigerant separated by the outdoor receiver to the inlet of the outdoor heat exchanger.

35. The heat storage air conditioner as claimed in claim 33, wherein the outdoor unit further includes a super-cooling heat exchanger for further cooling the refrigerant cooled as the refrigerant passes through the outdoor heat exchanger.

36. The heat storage air conditioner as claimed in claim 35, wherein the super-cooling heat exchanger is mounted between the outdoor heat exchanger and the outdoor receiver.

37. The heat storage air conditioner as claimed in claim 1, further comprising a super-cooling heat exchanger mounted to the outdoor unit for further cooling the refrigerant cooled as the refrigerant passes through the outdoor heat exchanger.

38. The heat storage air conditioner as claimed in claim 37, wherein the super-cooling heat exchanger makes the outdoor air and the refrigerant to heat exchange.

39. The heat storage air conditioner as claimed in claim 37, wherein the super-cooling heat exchanger includes;
a reverse flow pipe for branching a portion of the refrigerant passed through the outdoor heat exchanger,
a super-cooling expansion valve for expanding the refrigerant flowing through the reverse flow pipe to cooling down the refrigerant, and
a super-cooler of a double pipe for making heat exchange between the refrigerant passed through the outdoor heat exchanger and the refrigerant supplied through the reverse flow pipe.

40. The heat storage air conditioner as claimed in claim 39, wherein the super-cooler includes;
an inner pipe for flow of the refrigerant passed through the outdoor heat exchanger, and
an outer pipe around the inner pipe, the outer pipe connected to the reverse flow pipe for receiving refrigerant through the reverse flow pipe.

41. The heat storage air conditioner as claimed in claim 40, wherein the outer pipe has a bypass flow line connected to one side thereof for guiding the refrigerant passed through the outer pipe to the compressor of the outdoor unit.

42. The heat storage air conditioner as claimed in claim 40, wherein the inner pipe includes a plurality of heat dissipation ribs projected outwardly from an outside circumference.

43. The heat storage air conditioner as claimed in claim 42, wherein the heat dissipation rib has a disk shape.

44. The heat storage air conditioner as claimed in claim 42, wherein the heat dissipation rib is mounted perpendicular to a length direction of the inner pipe.

45. The heat storage air conditioner as claimed in claim 19, wherein the thermal storage unit further includes an internal circulating unit for circulating the thermal storage substance in the thermal storage tank.

46. The heat storage air conditioner as claimed in claim 45, wherein the internal circulating unit includes;
a circulating fan for forcing a flow of the thermal storage substance in the thermal storage tank, and
a fan motor for providing rotating power to the circulating fan.

47. The heat storage air conditioner as claimed in claim 46, wherein the circulating fan is mounted on an inside of the thermal storage tank, the fan motor is mounted on an outside of the thermal storage tank, and the rotation power is transmitted from the fan motor to the circulating fan through a motor shaft.

48. The heat storage air conditioner as claimed in claim 47, wherein the motor shaft is mounted passed through one side of the thermal storage tank, with a sealing member mounted on an outside circumference of the motor shaft for preventing the thermal storage substance from leaking from the thermal storage tank.

49. The heat storage air conditioner as claimed in claim 46, wherein the circulating fan and the fan motor are mounted in the thermal storage tank.

50. The heat storage air conditioner as claimed in claim 45, wherein the internal circulating unit includes;
a guide pipe having opposite ends connected to an outside of the thermal storage tank so as to be in communication with an inside of the thermal storage tank for forming a circulating flow line together with the thermal storage tank, and
a circulating pump for drawing the thermal storage substance from the thermal storage tank through an end of the guide pipe forcibly and discharging the thermal storage substance to the other end of the guide pipe.

51. The heat storage air conditioner as claimed in claim 50, wherein the internal circulating unit is mounted to at least two places of the thermal storage tank.

52. The heat storage air conditioner as claimed in claim 51, wherein the internal circulating unit is mounted on opposite sides of the thermal storage tank.

53. The heat storage air conditioner as claimed in claim 1, wherein the functional unit includes;
a first supplementary pump having one side connected to a pipe line connected to the thermal storage heat exchanger of the thermal storage unit, and the other side connected to a pipe line connected to the indoor unit, for pumping up the refrigerant heat exchanged at the thermal storage unit to the indoor unit;
a supplementary heat exchanger unit for heat exchanging the refrigerant heat exchanged at the indoor unit again with outside air, and supplying to the thermal storage unit, and a plurality of valves for selective control of a refrigerant flow to the outdoor unit, the thermal storage unit, the indoor unit, the first supplementary pump, and the supplementary heat exchanger unit.

54. The heat storage air conditioner as claimed in claim 53, wherein the supplementary heat exchange unit includes;
a supplementary flow line having one end connected to a pipe line connected to the indoor unit, and the other end connected to the thermal storage heat exchanger of the thermal storage unit,
a supplementary heat exchanger for making heat exchange of the refrigerant flowing through the supplementary flow line, and
a second supplementary pump for forcing a refrigerant flow through the supplementary flow line.

## Patentansprüche

1. Wärmespeicher-Klimaanlage, umfassend:
eine Außeneinheit (100) mit einem Außen-Wärmetauscher (120) zum Durchführen eines Wärmetauschs und wenigstens einem Kompressor zum Komprimieren von Kühlmittel;
eine Inneneinheit (400) mit einer Mehrzahl von Innen-Wärmetauschern zum Durchführen eines Wärmetauschs, wobei die Mehrzahl der Innen-Wärmetauscher voneinander verschiedene Verdampfungstemperaturen aufweist;
eine thermische Speichereinheit (300) zum Speichern von Energie, wobei die thermische Speichereinheit einen thermischer-Speicher-Wärmetauscher zum Durchführen eines Wärmetauschs aufweist; und
wenigstens eine funktionale Einheit (200) zur selektiven Steuerung eines Kühlmittelstroms aus der Außeneinheit, der Inneneinheit und der thermischen Speichereinheit gemäß einer Betriebsbedingung,
**dadurch gekennzeichnet, dass** die Mehrzahl von Innenwärmetauschern einen ersten Innen-Wärmetauscher (420a) zum Kühlen, einen zweiten Innen-Wärmetauscher (420b) zum Tiefkühlen und einen dritten Innen-Wärmetauscher (420c) zum Gefrierkühlen umfasst,
wobei die Inneneinheit eine erste Innen-Expansionsvorrichtung (430a), eine zweite Innen-Expansionsvorrichtung (430b) und eine dritte Innen-Expansionsvorrichtung (430c) an einer Einlassseite von jedem der Innen-Wärmetauscher zum Expandieren des Kühlmittels umfasst, und
wobei das in den ersten Innen-Wärmetauscher einzugebende Kühlmittel lediglich durch die erste Innen-Expansionsvorrichtung hindurchtritt, das in den zweiten Innen-Wärmetauscher einzugebende Kühlmittel durch die erste Innen-Expansionsvorrichtung und die zweite Innen-Expansionsvorrichtung hindurchtritt, und das in den dritten Innen-Wärmetauscher einzugebende Kühlmittel nacheinander durch die erste Innen-Expansionsvorrichtung, die zweite Innen-Expansionsvorrichtung und die dritte Innen-Expansionsvorrichtung hindurchtritt.

2. Wärmespeicher-Klimaanlage nach Anspruch 1, wobei die funktionale Einheit (200) an der Außeneinheit (100) montiert ist.

3. Wärmespeicher-Klimaanlage nach Anspruch 1, wobei die funktionale Einheit (200) an der thermischen Speichereinheit (300) montiert ist.

4. Wärmespeicher-Klimaanlage nach Anspruch 1, wobei die Inneneinheit (400), die thermische Speichereinheit (300) und die funktionale Einheit (200) individuell separat voneinander montiert sind.

5. Wärmespeicher-Klimaanlage nach Anspruch 1, wobei die funktionale Einheit (200) eine Mehrzahl von Ventilen zum Steuern des Kühlmittelstroms gemäß einer Betriebsbedingung umfasst.

6. Wärmespeicher-Klimaanlage nach Anspruch 5, wobei die funktionale Einheit Ventil-Steuermittel zum Steuern der Mehrzahl von Ventilen umfasst.

7. Wärmespeicher-Klimaanlage nach Anspruch 1, wobei die funktionale Einheit einen Zusatz-Wärmetauscher (212) zum Austauschen von Wärme zwischen dem dort hinein von der Inneneinheit und Außeneinheit eingegebenen Kühlmittel umfasst.

8. Wärmespeicher-Klimaanlage nach Anspruch 1, wobei die funktionale Einheit eine erste Zusatzpumpe zu einem erzwungenen Hochpumpen des Kühlmittels von der thermischen Speichereinheit zu der Inneneinheit umfasst.

9. Wärmespeicher-Klimaanlage nach Anspruch 8, wobei die erste Zusatzpumpe (246) wenigstens eine Pumpe mit konstanter Geschwindigkeit (246a) umfasst.

10. Wärmespeicher-Klimaanlage nach Anspruch 8, wobei die erste Zusatzpumpe wenigstens eine Inverterpumpe (246b) mit einer variablen Geschwindigkeit umfasst.

11. Wärmespeicher-Klimaanlage nach Anspruch 8, wobei die erste Zusatzpumpe eine Kombination von wenigstens einer Pumpe mit konstanter Geschwindigkeit und wenigstens einer Inverterpumpe mit einer variablen Geschwindigkeit umfasst.

12. Wärmespeicher-Klimaanlage nach Anspruch 11, wobei die Pumpe mit konstanter Geschwindigkeit separat von der Inverterpumpe angetrieben ist.

13. Wärmespeicher-Klimaanlage nach Anspruch 11, wobei die Pumpe mit konstanter Geschwindigkeit zusammen mit der Inverterpumpe angetrieben ist.

14. Wärmespeicher-Klimaanlage nach Anspruch 8, wobei die erste Zusatzpumpe (246) höher als die Außeneinheit oder die thermische Speichereinheit positioniert ist.

15. Wärmespeicher-Klimaanlage nach Anspruch 8, wobei die funktionale Einheit (200) ferner eine Aufnahme zum Trennen des von der ersten Zusatzpumpe geströmten Kühlmittels in Gas-Kühlmittel und Flüssig-Kühlmittel umfasst.

16. Wärmespeicher-Klimaanlage nach Anspruch 8, wobei die funktionelle Einheit ferner einen Trockner (244) zum Entfernen von Feuchtigkeit aus dem Kühlmittel umfasst, welches von der ersten Zusatzpumpe geströmt wird.

17. Wärmespeicher-Klimaanlage nach Anspruch 1, wobei die thermische Speichereinheit eine Mehrzahl von thermischer-Speicher-Wärmetauschern (322, 324) umfasst.

18. Wärmespeicher-Klimaanlage nach Anspruch 17, wobei die thermische Speichereinheit ferner eine thermischer-Speicher-Expansionsvorrichtung (330, 332) an einer Seite von jedem aus der Mehrzahl von thermischer-Speicher-Wärmetauschern umfasst.

19. Wärmespeicher-Klimaanlage nach Anspruch 1, wobei die thermische Speichereinheit wenigstens einen thermischen Speichertank mit einer darin enthaltenen thermischen Speichersubstanz zum Wärmetausch mit dem Kühlmittel, welches durch den thermischer-Speicher-Wärmetauscher strömt, und zum Speichern von Energie umfasst.

20. Wärmespeicher-Klimaanlage nach Anspruch 1, wobei die Innen-Expansionsvorrichtungen, welche jeweils mit den Innen-Wärmetauschern verbunden sind, mit Auslässen der Innen-Expansionsvorrichtungen verbunden sind, welche mit anderen Innen-Expansionsvorrichtungen verbunden sind, um das Kühlmittel von anderen Innen-Expansionsvorrichtungen jeweils erneut zu expandieren und zu den Innen-Wärmetauschern zu liefern.

21. Wärmespeicher-Klimaanlage nach Anspruch 1, wobei die Innen-Expansionsvorrichtungen derart eingerichtet sind, dass das in dem tiefkühlenden oder gefrierkühlenden Innen-Wärmetauscher eingegebene Kühlmittel durch zwei oder mehr als zwei Innen-Expansionsvorrichtungen hindurchtritt.

22. Wärmespeicher-Klimaanlage nach Anspruch 1, ferner umfassend eine Raumheizungs-Inneneinheit mit einem Raumheizungs-Wärmetauscher (440), welcher mit der Außeneinheit von einer Außenseite der Außeneinheit zum Wärmen eines Raums durch Wärmetausch mit Hochtemperatur- und Hochdruck-Kühlmittel von der Außeneinheit verbunden ist.

23. Wärmespeicher-Klimaanlage nach Anspruch 22, wobei die Raumheizungs-Inneneinheit mit anderen Inneneinheiten betreibbar ist, welche eine Raumkühlung ausführen.

24. Wärmespeicher-Klimaanlage nach Anspruch 22, wobei der Raumheizungs-Wärmetauscher (440) einen Einlass und einen Auslass aufweist, welche mit dem Außen-Wärmetauscher jeweils an einem Einlass und einem Auslass davon verbunden sind.

25. Wärmespeicher-Klimaanlage nach Anspruch 24, ferner umfassend ein Raumheizungs-Ventil (142), welches an einer Verbindung des Außen-Wärmetauschers und des Raumheizungs-Wärmetauschers zum Steuern einer Kühlmittellieferung von der Außeneinheit zu der Raumheizungs-Inneneinheit montiert ist.

26. Wärmespeicher-Klimaanlage nach Anspruch 19, wobei die thermische Speichereinheit ferner eine Zirkulierungseinheit zum Zirkulieren der thermischen Speichersubstanz von dem thermischen Speichertank durch die Inneneinheit umfasst.

27. Wärmespeicher-Klimaanlage nach Anspruch 26, wobei die Zirkulierungseinheit umfasst:
eine Wasserabgabe-Strömungsleitung zum Abgeben der thermischen Speichersubstanz von dem thermischen Speichertank zu der Inneneinheit,
eine Wasserlieferungs-Strömungsleitung zum Führen der thermischen Speichersubstanz, welche durch die Inneneinheit hindurchgetreten ist, zu einem Inneren des thermischen Speichertanks, und
eine Zirkulationspumpe zur erzwungenen Zirkulation der thermischen Speichersubstanz durch die Wasserabgabe-Strömungsleitung, die Inneneinheit und die Wasserlieferungs-Strömungsleitung.

28. Wärmespeicher-Klimaanlage nach Anspruch 19, wobei der thermische Speichertank eine Schichtungsplatte (370) zum Unterdrücken einer Strömung der thermischen Speichersubstanz in Richtung nach oben/unten in dem thermischen Speichertank umfasst, um eine Schichtung der thermischen Speichersubstanz herbeizuführen.

29. Wärmespeicher-Klimaanlage nach Anspruch 28, wobei die Schichtungsplatte darin gebildet feine Durchtrittslöcher zum Hindurchtreten der thermischen Speichersubstanz aufweist.

30. Wärmespeicher-Klimaanlage nach Anspruch 27, wobei die Zirkulationspumpe an der Wasserabgabe-Strömungsleitung montiert ist.

31. Wärmespeicher-Klimaanlage nach Anspruch 27, ferner umfassend eine Sprühdüse an einem Ende der Wasserlieferungs-Strömungsleitung zum Versprühen der zu dem thermischen Speichertank gelieferten thermischen Speichersubstanz.

32. Wärmespeicher-Klimaanlage nach Anspruch 26, wobei der thermische Speichertank der thermischen Speichereinheit ferner eine interne Zirkulationseinheit zum Erzwingen einer Zirkulation der thermischen Speichersubstanz in dem thermischen Speichertank umfasst.

33. Wärmespeicher-Klimaanlage nach Anspruch 1, ferner umfassend eine Außenaufnahme, welche an der Außeneinheit montiert ist, zum Trennen des durch den Außen-Wärmetauscher hindurchtretenden Kühlmittels in Flüssig-Kühlmittel und Gas-Kühlmittel, und zum Abgeben lediglich des Flüssig-Kühlmittels an ein Äußeres der Außeneinheit.

34. Wärmespeicher-Klimaanlage nach Anspruch 33, wobei die Außeneinheit ferner eine Bypass-Strömungsleitung zum Rückführen des von der Außenaufnahme abgetrennten Gas-Kühlmittels zu dem Einlass des Außen-Wärmetauschers umfasst.

35. Wärmespeicher-Klimaanlage nach Anspruch 33, wobei die Außeneinheit ferner einen Unterkühlungs-Wärmetauscher zum weiteren Kühlen des Kühlmittels umfasst, welches gekühlt wird, wenn das Kühlmittel durch den Außen-Wärmetauscher hindurchtritt.

36. Wärmespeicher-Klimaanlage nach Anspruch 35, wobei der Unterkühlungs-Wärmetauscher zwischen dem Außen-Wärmetauscher und der Außenaufnahme montiert ist.

37. Wärmespeicher-Klimaanlage nach Anspruch 1, ferner umfassend einen Unterkühlungs-Wärmetauscher, welcher an der Außeneinheit montiert ist, um das Kühlmittel weiter zu kühlen, welches gekühlt wird, wenn das Kühlmittel durch den Außen-Wärmetauscher hindurchtritt.

38. Wärmespeicher-Klimaanlage nach Anspruch 37, wobei der Unterkühlungs-Wärmetauscher die Außenluft und das Kühlmittel veranlasst, Wärme zu tauschen.

39. Wärmespeicher-Klimaanlage nach Anspruch 37, wobei der Unterkühlungs-Wärmetauscher umfasst:
ein Rückführungs-Strömungsrohr zum Abzweigen eines Teils des durch den Außen-Wärmetauscher hindurchgetretenen Kühlmittels,
ein Unterkühlungs-Expansionsventil zum Expandieren des durch das Rückführungs-Strömungsrohr strömenden Kühlmittels, um das Kühlmittel herunter zu kühlen, und
einen Unterkühler eines Doppelrohrs zum Veranlassen eines Wärmetauschs zwischen dem durch den Außen-Wärmetauscher hindurchgetretenen Kühlmittel und dem von dem Rückführungs-Strömungsrohr gelieferten Kühlmittel.

40. Wärmespeicher-Klimaanlage nach Anspruch 39, wobei der Unterkühler umfasst:
ein Innenrohr zum Strömen des Kühlmittels, welches durch den Außen-Wärmetauscher hindurchgetreten ist, und
ein Außenrohr um das Innenrohr herum, wobei das Außenrohr mit dem Rückführungs-Strömungsrohr zum Aufnehmen von Kühlmittel durch das Rückführungs-Strömungsrohr verbunden ist.

41. Wärmespeicher-Klimaanlage nach Anspruch 40, wobei das Außenrohr eine Bypass-Strömungsleitung aufweist, welche mit einer Seite davon zum Führen des Kühlmittels, welches durch das Außenrohr hindurchgetreten ist, zu dem Kompressor der Außeneinheit verbunden ist.

42. Wärmespeicher-Klimaanlage nach Anspruch 40, wobei das Innenrohr eine Mehrzahl von Wärme-Verteilungsrippen umfasst, welche von einem Außenumfang nach außen vorstehen.

43. Wärmespeicher-Klimaanlage nach Anspruch 42, wobei die Wärme-Verteilungsrippe eine Scheibenform aufweist.

44. Wärmespeicher-Klimaanlage nach Anspruch 42, wobei die Wärme-Verteilungsrippe senkrecht zu einer Längsrichtung des Innenrohrs montiert ist.

45. Wärmespeicher-Klimaanlage nach Anspruch 19, wobei die thermische Speichereinheit ferner eine interne Zirkulationseinheit zum Zirkulieren der thermischen Speichersubstanz in dem thermischen Speichertank umfasst.

46. Wärmespeicher-Klimaanlage nach Anspruch 45, wobei die interne Zirkulationseinheit umfasst:
ein Zirkulationsgebläse zum Erzwingen einer Strömung der thermischen Speichersubstanz in dem thermischen Speichertank, und
einen Gebläsemotor zum Bereitstellen von Rotationsleistung an das Zirkulationsgebläse.

47. Wärmespeicher-Klimaanlage nach Anspruch 46, wobei das Zirkulationsgebläse an einem Inneren des thermischen Speichertanks montiert ist, der Gebläsemotor an einem Äußeren des thermischen Speichertanks montiert ist, und die Rotationsleitung von dem Gebläsemotor zu dem Zirkulationsgebläse durch eine Motorwelle übertragen wird.

48. Wärmespeicher-Klimaanlage nach Anspruch 47, wobei die Motorwelle durch eine Seite des thermischen Speichertanks hindurchtretend montiert ist, wobei ein Dichtungselement an einem Außenumfang der Motorwelle montiert ist, um zu verhindern, dass die thermische Speichersubstanz aus dem thermischen Speichertank ausläuft.

49. Wärmespeicher-Klimaanlage nach Anspruch 46, wobei das Zirkulationsgebläse und der Gebläsemotor in dem thermischen Speichertank montiert sind.

50. Wärmespeicher-Klimaanlage nach Anspruch 45, wobei die interne Zirkulationseinheit umfasst:
ein Führungsrohr mit gegenüberliegenden Enden, welche mit einem Äußeren des thermischen Speichertanks verbunden sind, um mit einem Inneren des thermischen Speichertanks in Verbindung zu stehen, um eine Zirkulations-Strömungsleitung zusammen mit dem thermischen Speichertank zu bilden, und
eine Zirkulationspumpe zum erzwungenen Ansaugen der thermischen Speichersubstanz aus dem thermischen Speichertank durch ein Ende des Führungsrohrs und zum Abgeben der thermischen Speichersubstanz zu dem anderen Ende des Führungsrohrs.

51. Wärmespeicher-Klimaanlage nach Anspruch 50, wobei die interne Zirkulationseinheit an wenigstens zwei Stellen des thermischen Speichertanks montiert ist.

52. Wärmespeicher-Klimaanlage nach Anspruch 51, wobei die interne Zirkulationseinheit an gegenüberliegenden Seiten des thermischen Speichertanks montiert ist.

53. Wärmespeicher-Klimaanlage nach Anspruch 1, wobei die funktionale Einheit umfasst:
eine erste Zusatzpumpe, welche eine Seite aufweist, welche mit einer Rohrleitung verbunden ist, welche mit dem thermischen-Speicher-Wärmetauscher der thermischen Speichereinheit verbunden ist, und wobei die andere Seite mit einer Rohrleitung verbunden ist, welche mit der Inneneinheit verbunden ist, um das an der thermischen Speichereinheit wärmegetauschte Kühlmittel zu der Inneneinheit zu pumpen;
eine Zusatz-Wärmetauschereinheit zum erneuten Wärmetauschen des an der Inneneinheit wärmegetauschten Kühlmittels mit Außenluft, und zum Liefern an die thermische Speichereinheit, und eine Mehrzahl von Ventilen zum selektiven Steuern eines Kühlmittelstroms zu der Außeneinheit, der thermischen Speichereinheit, der Inneneinheit, der ersten Zusatzpumpe und der Zusatz-Wärmetauschereinheit.

54. Wärmespeicher-Klimaanlage nach Anspruch 53, wobei die Zusatz-Wärmetauschereinheit umfasst:
eine Zusatz-Strömungsleitung, welche ein Ende aufweist, welches mit einer Rohrleitung verbunden ist, welche mit der Inneneinheit verbunden ist, und wobei das andere Ende mit dem thermischen-Speicher-Wärmetauscher der thermischen Speichereinheit verbunden ist,
einen Zusatz-Wärmetauscher zum Durchführen eines Wärmetauschs des durch die Zusatz-Strömungsleitung strömenden Kühlmittels, und
eine zweite Zusatzpumpe zum Erzwingen einer Kühlmittelströmung durch die Zusatz-Strömungsleitung.

## Revendications

1. Climatiseur à stockage thermique comprenant :
une unité extérieure (100) ayant un échangeur de chaleur extérieur (120) pour effectuer un échange de chaleur, et au moins un compresseur pour comprimer un fluide frigorigène ;
une unité intérieure (400) ayant une pluralité d'échangeurs de chaleur intérieurs pour effectuer un échange de chaleur, la pluralité des échangeurs de chaleur intérieurs ayant des températures de vaporisation différentes les unes des autres ;
une unité de stockage thermique (300) pour stocker de l'énergie, l'unité de stockage thermique ayant un échangeur de chaleur à stockage thermique pour effectuer un échange de chaleur ; et
au moins une unité fonctionnelle (200) pour réguler de manière sélective un écoulement de fluide frigorigène entre l'unité extérieure, l'unité intérieure et l'unité de stockage thermique selon une condition de fonctionnement,
**caractérisé en ce que** la pluralité d'échangeurs de chaleur intérieurs comporte un premier échangeur de chaleur intérieur (420a) pour le refroidissement, un deuxième échangeur de chaleur intérieur (420b) pour la réfrigération et un troisième échangeur de chaleur intérieur (420c) pour la congélation,
dans lequel l'unité intérieure comporte un premier dispositif de détente intérieur (430a), un deuxième dispositif de détente intérieur (430b) et un troisième dispositif de détente intérieur (430c) sur un côté d'entrée de chacun des échangeurs de chaleur intérieurs pour dilater le fluide frigorigène , et
dans lequel le fluide frigorigène devant être introduit dans le premier échangeur de chaleur intérieur traverse uniquement le premier dispositif de détente intérieur, le fluide frigorigène devant être introduit dans le deuxième échangeur de chaleur intérieur traverse le premier dispositif de détente intérieur et le deuxième dispositif de détente intérieur et le fluide frigorigène devant être introduit dans le troisième échangeur de chaleur intérieur traverse le premier dispositif de détente intérieur, le deuxième dispositif de détente intérieur et le troisième dispositif de détente intérieur successivement.

2. Climatiseur à stockage thermique tel que revendiqué dans la revendication 1, dans lequel l'unité fonctionnelle (200) est montée sur l'unité extérieure (100).

3. Climatiseur à stockage thermique tel que revendiqué dans la revendication 1, dans lequel l'unité fonctionnelle (200) est montée sur l'unité de stockage thermique (300).

4. Climatiseur à stockage thermique tel que revendiqué dans la revendication 1, dans lequel l'unité intérieure (400), l'unité de stockage thermique (300) et l'unité fonctionnelle (200) sont montées individuellement en étant séparées les unes des autres.

5. Climatiseur à stockage thermique tel que revendiqué dans la revendication 1, dans lequel l'unité fonctionnelle (200) comporte une pluralité de soupapes pour réguler l'écoulement de fluide frigorigène selon une condition de fonctionnement.

6. Climatiseur à stockage thermique tel que revendiqué dans la revendication 5, dans lequel l'unité fonctionnelle comporte un moyen de commande de soupape pour commander la pluralité de soupapes.

7. Climatiseur à stockage thermique tel que revendiqué dans la revendication 1, dans lequel l'unité fonctionnelle comporte un échangeur de chaleur supplémentaire (212) pour effectuer un échange de chaleur entre le fluide frigorigène introduit à celui-ci provenant de l'unité intérieure et l'air extérieur.

8. Climatiseur à stockage thermique tel que revendiqué dans la revendication 1, dans lequel l'unité fonctionnelle comporte une première pompe supplémentaire pour pomper le fluide frigorigène à partir de l'unité de stockage thermique vers l'unité intérieure de manière forcée.

9. Climatiseur à stockage thermique tel que revendiqué dans la revendication 8, dans lequel la première pompe supplémentaire (246) comporte au moins une pompe à vitesse constante (246a).

10. Climatiseur à stockage thermique tel que revendiqué dans la revendication 8, dans lequel la première pompe supplémentaire comporte au moins une pompe à inverseur (246b) qui a une vitesse variable.

11. Climatiseur à stockage thermique tel que revendiqué dans la revendication 8, dans lequel la première pompe supplémentaire comporte une combinaison d'au moins une pompe à vitesse constante et d'au moins une pompe à inverseur ayant une vitesse variable.

12. Climatiseur à stockage thermique tel que revendiqué dans la revendication 11, dans lequel la pompe à vitesse constante est entraînée séparément de la pompe à inverseur.

13. Climatiseur à stockage thermique tel que revendiqué la revendication 11, dans lequel la pompe à vitesse constante est entraînée avec la pompe à inverseur.

14. Climatiseur à stockage thermique tel que revendiqué dans la revendication 8, dans lequel la première pompe supplémentaire (246) est positionnée plus haut que l'unité extérieure ou l'unité de stockage thermique.

15. Climatiseur à stockage thermique tel que revendiqué dans la revendication 8, dans lequel l'unité fonctionnelle (200) comporte en outre un réservoir (248) pour séparer le fluide frigorigène mis en circulation par la première pompe supplémentaire en un fluide frigorigène gazeux et un fluide frigorigène liquide.

16. Climatiseur à stockage thermique tel que revendiqué dans la revendication 8, dans lequel l'unité fonctionnelle comporte en outre un déshydrateur (244) pour éliminer l'humidité du fluide frigorigène mis en circulation par la première pompe supplémentaire.

17. Climatiseur à stockage thermique tel que revendiqué dans la revendication 1, dans lequel l'unité de stockage thermique comporte une pluralité d'échangeurs de chaleur à stockage thermique (322, 324).

18. Climatiseur à stockage thermique tel que revendiqué dans la revendication 17, dans lequel l'unité de stockage thermique comporte en outre un dispositif de détente à stockage thermique (330, 332) au niveau d'un côté de chacun de la pluralité d'échangeurs de chaleur à stockage thermique.

19. Climatiseur à stockage thermique tel que revendiqué dans la revendication 1, dans lequel l'unité de stockage thermique comporte au moins une cuve de stockage thermique ayant une substance de stockage thermique maintenue dans celle-ci pour un échange de chaleur avec le fluide frigorigène s'écoulant à travers l'échangeur de chaleur à stockage thermique et un stockage d'énergie.

20. Climatiseur à stockage thermique tel que revendiqué dans la revendication 1, dans lequel les dispositifs de détente intérieurs reliés respectivement aux échangeurs de chaleur intérieurs sont reliés aux sorties des dispositifs de détente intérieurs reliés à d'autres dispositifs de détente intérieurs, pour dilater de nouveau le fluide frigorigène provenant d'autres dispositifs de détente intérieurs, et le fournir aux échangeurs de chaleur intérieurs, respectivement.

21. Climatiseur à stockage thermique tel que revendiqué dans la revendication 1, dans lequel les dispositifs de détente intérieurs sont agencés de sorte que le fluide frigorigène introduit dans l'échangeur de chaleur intérieur de réfrigération ou de congélation traverse deux dispositifs de détente intérieurs ou plus.

22. Climatiseur à stockage thermique tel que revendiqué dans la revendication 1, comprenant en outre une unité intérieure pour chauffage de pièce ayant un échangeur de chaleur pour chauffage de pièce (440) relié à l'unité extérieure à partir d'une partie externe de l'unité extérieure pour chauffer une pièce par échange de chaleur avec un fluide frigorigène à haute température et à haute pression provenant de l'unité extérieure.

23. Climatiseur à stockage thermique tel que revendiqué dans la revendication 22, dans lequel l'unité intérieure pour chauffage de pièce fonctionne avec d'autres unités intérieures qui effectuent un refroidissement de pièce.

24. Climatiseur à stockage thermique tel que revendiqué dans la revendication 22, dans lequel l'échangeur de chaleur pour chauffage de pièce (440) a une entrée et une sortie reliées à l'échangeur de chaleur extérieur au niveau d'une entrée et d'une sortie de celui-ci respectivement.

25. Climatiseur à stockage thermique tel que revendiqué dans la revendication 24, comprenant en outre une soupape de chauffage de pièce (142) montée sur une liaison de l'échangeur de chaleur extérieur et l'échangeur de chaleur pour chauffage de pièce pour réguler l'alimentation en fluide frigorigène de l'unité extérieure vers l'unité intérieure pour chauffage de pièce.

26. Climatiseur à stockage thermique tel que revendiqué dans la revendication 19, dans lequel l'unité de stockage thermique comporte en outre une unité de circulation pour faire circuler la substance de stockage thermique depuis la cuve de stockage thermique à travers l'unité intérieure.

27. Climatiseur à stockage thermique tel que revendiqué dans la revendication 26, dans lequel l'unité de circulation comporte :
une conduite d'écoulement pour évacuation d'eau destinée à évacuer la substance de stockage thermique de la cuve de stockage thermique vers l'unité intérieure,
une conduite d'écoulement pour alimentation en eau destinée à guider la substance de stockage thermique ayant traversé l'unité intérieure vers une partie interne de la cuve de stockage thermique, et
une pompe de circulation pour une circulation forcée de la substance de stockage thermique à travers la conduite d'écoulement pour évacuation d'eau, l'unité intérieure et la conduite d'écoulement pour alimentation en eau.

28. Climatiseur à stockage thermique tel que revendiqué dans la revendication 19, dans lequel la cuve de stockage thermique comporte une plaque de stratification (370) pour éliminer l'écoulement ascendant/descendant de la substance de stockage thermique dans la cuve de stockage thermique de manière à induire une stratification de la substance de stockage thermique.

29. Climatiseur à stockage thermique tel que revendiqué dans la revendication 28, dans lequel la plaque de stratification a des trous traversants fins formés dans celle-ci pour que la substance de stockage thermique passe à travers ceux-ci.

30. Climatiseur à stockage thermique tel que revendiqué dans la revendication 27, dans lequel la pompe de circulation est montée sur la conduite d'écoulement pour évacuation d'eau.

31. Climatiseur à stockage thermique tel que revendiqué dans la revendication 27, comprenant en outre une buse de pulvérisation au niveau d'une extrémité de la conduite d'écoulement pour alimentation en eau destinée à pulvériser la substance de stockage thermique fournie à la cuve de stockage thermique.

32. Climatiseur à stockage thermique tel que revendiqué dans la revendication 26, dans lequel la cuve de stockage thermique de l'unité de stockage thermique comporte en outre une unité de circulation interne pour forcer la circulation de la substance de stockage thermique dans la cuve de stockage thermique.

33. Climatiseur à stockage thermique tel que revendiqué dans la revendication 1, comprenant en outre un réservoir extérieur monté sur l'unité extérieure pour séparer le fluide frigorigène passant à travers l'échangeur de chaleur extérieur en un fluide frigorigène liquide et un fluide frigorigène gazeux, et évacuer uniquement le fluide frigorigène liquide vers une partie externe de l'unité extérieure.

34. Climatiseur à stockage thermique tel que revendiqué dans la revendication 33, dans lequel l'unité extérieure comporte en outre une conduite d'écoulement de dérivation pour renvoyer le fluide frigorigène gazeux séparé par le réservoir extérieur vers l'entrée de l'échangeur de chaleur extérieur.

35. Climatiseur à stockage thermique tel que revendiqué dans la revendication 33, dans lequel l'unité extérieure comporte en outre un échangeur de chaleur de sous-refroidissement pour refroidir davantage le fluide frigorigène refroidi lorsque le fluide frigorigène traverse l'échangeur de chaleur extérieur.

36. Climatiseur à stockage thermique tel que revendiqué dans la revendication 35, dans lequel l'échangeur de chaleur de sous-refroidissement est monté entre l'échangeur de chaleur extérieur et le réservoir extérieur.

37. Climatiseur à stockage thermique tel que revendiqué dans la revendication 1, comprenant en outre un échangeur de chaleur de sous-refroidissement monté sur l'unité extérieure pour refroidir davantage le fluide frigorigène refroidi lorsque le fluide frigorigène traverse l'échangeur de chaleur extérieur.

38. Climatiseur à stockage thermique tel que revendiqué dans la revendication 37, dans lequel l'échangeur de chaleur de sous-refroidissement provoque un échange de chaleur entre l'air extérieur et le fluide frigorigène.

39. Climatiseur à stockage thermique tel que revendiqué dans la revendication 37, dans lequel l'échangeur de chaleur de sous-refroidissement comporte ;
un tuyau d'écoulement inverse pour dériver une partie du fluide frigorigène ayant traversé l'échangeur de chaleur extérieur,
une soupape de détente de sous-refroidissement pour dilater le fluide frigorigène s'écoulant à travers le tuyau d'écoulement inverse pour refroidir le fluide frigorigène, et
un sous-refroidisseur d'un tuyau double pour effectuer un échange de chaleur entre le fluide frigorigène ayant traversé l'échangeur de chaleur extérieur et le fluide frigorigène fourni à travers le tuyau d'écoulement inverse.

40. Climatiseur à stockage thermique tel que revendiqué dans la revendication 39, dans lequel le sous-refroidisseur comporte ;
un tuyau interne pour l'écoulement du fluide frigorigène ayant traversé l'échangeur de chaleur extérieur, et
un tuyau externe autour du tuyau interne, le tuyau externe étant relié au tuyau d'écoulement inverse pour recevoir le fluide frigorigène à travers le tuyau d'écoulement inverse.

41. Climatiseur à stockage thermique tel que revendiqué dans la revendication 40, dans lequel le tuyau externe a une conduite d'écoulement de dérivation reliée à un côté de celui-ci pour guider le fluide frigorigène ayant traversé le tuyau externe vers le compresseur de l'unité extérieure.

42. Climatiseur à stockage thermique tel que revendiqué dans la revendication 40, dans lequel le tuyau interne comporte une pluralité de nervures de dissipation de chaleur faisant saillie vers l'extérieur à partir d'une circonférence externe.

43. Climatiseur à stockage thermique tel que revendiqué dans la revendication 42, dans lequel la nervure de dissipation de chaleur a une forme de disque.

44. Climatiseur à stockage thermique tel que revendiqué dans la revendication 42, dans lequel la nervure de dissipation de chaleur est montée perpendiculairement à une direction de longueur du tube interne.

45. Climatiseur à stockage thermique tel que revendiqué dans la revendication 19, dans lequel l'unité de stockage thermique comporte en outre une unité de circulation interne pour faire circuler la substance de stockage thermique dans la cuve de stockage thermique.

46. Climatiseur à stockage thermique tel que revendiqué dans la revendication 45, dans lequel l'unité de circulation interne comporte ;
un ventilateur de circulation pour forcer un écoulement de la substance de stockage thermique dans la cuve de stockage thermique, et
un moteur de ventilateur pour fournir une puissance de rotation au ventilateur de circulation.

47. Climatiseur à stockage thermique tel que revendiqué dans la revendication 46, dans lequel le ventilateur de circulation est monté à l'intérieur de la cuve de stockage thermique, le moteur de ventilateur est monté à l'extérieur de la cuve de stockage thermique, et la puissance de rotation est transmise du moteur de ventilateur au ventilateur de circulation à travers un arbre de moteur.

48. Climatiseur à stockage thermique tel que revendiqué dans la revendication 47, dans lequel l'arbre de moteur est monté de manière à traverser un côté de la cuve de stockage thermique, avec un élément d'étanchéité monté sur une circonférence externe de l'arbre de moteur pour empêcher une fuite de la substance de stockage thermique depuis la cuve de stockage thermique.

49. Climatiseur à stockage thermique tel que revendiqué dans la revendication 46, dans lequel le ventilateur de circulation et le moteur de ventilateur sont montés dans la cuve de stockage thermique.

50. Climatiseur à stockage thermique tel que revendiqué dans la revendication 45, dans lequel l'unité de circulation interne comporte ;
un tuyau de guidage ayant des extrémités opposées reliées à une partie externe de la cuve de stockage thermique de manière à être en communication avec une partie interne de la cuve de stockage thermique pour former une conduite d'écoulement de circulation conjointement avec la cuve de stockage thermique, et
une pompe de circulation pour aspirer la substance de stockage thermique de la cuve de stockage thermique à travers une extrémité du tuyau de guidage de manière forcée et évacuer la substance de stockage thermique vers l'autre extrémité du tuyau de guidage.

51. Climatiseur à stockage thermique tel que revendiqué dans la revendication 50, dans lequel l'unité de circulation interne est montée au niveau d'au moins deux emplacements de la cuve de stockage thermique.

52. Climatiseur à stockage thermique tel que revendiqué dans la revendication 51, dans lequel l'unité de circulation interne est montée sur des côtés opposés de la cuve de stockage thermique.

53. Climatiseur à stockage thermique tel que revendiqué dans la revendication 1, dans lequel l'unité fonctionnelle comporte ;
une première pompe supplémentaire ayant un côté relié à une canalisation reliée à l'échangeur de chaleur à stockage thermique de l'unité de stockage thermique, et l'autre côté relié à une canalisation reliée à l'unité intérieure, pour pomper le fluide frigorigène ayant subi un échange de chaleur au niveau de l'unité de stockage thermique vers l'unité intérieure ;
une unité d'échange de chaleur supplémentaire pour effectuer un échange de chaleur entre le fluide frigorigène ayant subi un échange de chaleur au niveau de l'unité intérieure et l'air extérieur à nouveau, et le fournir à l'unité de stockage thermique, et une pluralité de soupapes pour réguler de manière sélective un écoulement de fluide frigorigène vers l'unité extérieure, l'unité de stockage thermique, l'unité intérieure, la première pompe supplémentaire et l'unité d'échange de chaleur supplémentaire.

54. Climatiseur à stockage thermique tel que revendiqué dans la revendication 53, dans lequel l'unité d'échange de chaleur supplémentaire comporte ;
une conduite d'écoulement supplémentaire ayant une extrémité reliée à une canalisation reliée à l'unité intérieure, et l'autre extrémité reliée à l'échangeur de chaleur à stockage thermique de l'unité de stockage thermique,
un échangeur de chaleur supplémentaire pour effectuer un échange de chaleur du fluide frigorigène s'écoulant à travers la conduite d'écoulement supplémentaire, et
une deuxième pompe supplémentaire pour forcer un écoulement de fluide frigorigène à travers la conduite d'écoulement supplémentaire.
